# EUROPÄISCHE PATENTSCHRIFT

(11) **EP 2 820 329 B1**
(45) Veröffentlichungstag und Bekanntmachung des Hinweises auf die Patenterteilung: **27.07.2016**
(21) Anmeldenummer: 13700851.2
(22) Anmeldetag: 10.01.2013
(51) Int. Cl.: F16H 3/66

(54) **MEHRSTUFENGETRIEBE IN PLANETENBAUWEISE FÜR EIN FAHRZEUG**
MULTI-STAGE PLANETARY VEHICLE TRANSMISSION
ENGRENAGE À PLUSIEURS RAPPORTS DE TYPE PLANÉTAIRE POUR VÉHICULE

(30) Priorität: 29.02.2012 DE 102012203069
(43) Veröffentlichungstag der Anmeldung: 07.01.2015
(73) Patentinhaber: ZF Friedrichshafen AG, 80846 Friedrichshafen (DE)
(72) Erfinder: BECK, Stefan, 88097 Eriskirch (DE); SIBLA, Christian, 88045 Friedrichshafen (DE); RIEGER, Wolfgang, 88048 Friedrichshafen (DE)
(86) Internationale Anmeldenummer: PCT/EP2013/050357
(87) Internationale Veröffentlichungsnummer: WO 2013/127548

(56) Entgegenhaltungen:
- DE-A1-102009 019 046
- US-A1- 2009 209 389

## Beschreibung

Die vorliegende Erfindung betrifft ein Mehrstufengetriebe in Planetenbauweise für ein Fahrzeug gemäß der im Oberbegriff der Patentansprüche 1 bis 5 naher definierten Art. Ein Solches Mehrstufengetriebe ist aus der DE 10 2009 019 046 A1 bekannt.

Beispielsweise aus der Druckschrift US 7 887 453 B2 ist ein Mehrstufengetriebe in Planetenbauweise für ein Fahrzeug bekannt. Das Mehrstufengetriebe umfasst vier Planetenradsätze und sechs Schaltelemente, so dass neun Vorwärtsgangstufen und eine Rückwärtsgangstufe realisiert werden. Aus dem Schaltschema des bekannten Mehrstufengetriebes ergibt sich, dass zur Realisierung jeder Gangstufe nur jeweils zwei der Schaltelemente geschlossen sind. Durch die geöffneten Lamellenschaltelemente ergeben sich somit unerwünscht Schleppverluste.

Ferner ist bekannt, dass es vorteilhaft ist, Schaltelemente leicht zugänglich, z. B. außen zu positionieren und so die hydraulischen und/ oder mechanischen und/ oder elektrischen Betätigungsleitungen einfacher und/ oder verlustfreier anordnen zu können.

Demzufolge liegt der vorliegenden Erfindung die Aufgabe zu Grunde, ein Mehrstufengetriebe der eingangs beschriebenen Gattung mit verbessertem Wirkungsgrad und geringem Bauaufwand sowie mit bezüglich ihrer Betätigung optimiert angeordneten Schaltelementen vorzuschlagen.

Diese Aufgabe wird erfindungsgemäß durch die Merkmale der Patentansprüche 1 bis 5 gelöst, wobei sich vorteilhafte Weiterbildungen der Erfindung aus den Unteransprüchen und der Beschreibung sowie den Zeichnungen ergeben.

Demnach wird ein Mehrstufengetriebe in Planetenbauweise bzw. ein mehrgängiges Planetengetriebe für ein Fahrzeug mit einem Gehäuse vorgeschlagen, indem vier Planetenradsätze bzw. vier Planetensatz-Radebenen und vorzugsweise acht drehbare Wellen sowie sechs Schaltelemente aufgenommen sind. Durch die Betätigung der Schaltelemente werden mehrere Gangstufen realisiert.

Dadurch, dass die erste Welle als Antrieb bzw. Antriebswelle jeweils mit den Sonnenräder des ersten und des dritten Planetenradsatzes und jeweils mit den Planetenträgern des ersten Planetenradsatzes und zweiten Planetenradsatzes sowie mit dem Gehäuse verbindbar oder verbunden ist, dass die zweite Welle als Abtrieb bzw. Abtriebswelle mit dem Hohlrad des vierten Planetenradsatzes und mit dem Planetenradträger des dritten Planetenradsatzes verbindbar oder verbunden ist, dass das Hohlrad des ersten Planetenradsatzes mit dem Sonnenrad des zweiten Plänetenradsatzes und dem Planetenradträger des vierten Planetenradsatzes verbindbar oder verbunden ist, dass die Hohlradträger des zweiten und des dritten Planetenradsatzes verbindbar oder verbunden sind, und dass das Sonnenrad des vierten Planetenradsatzes dem Gehäuse verbindbar ist, ergibt sich ein erfindungsgemäße Mehrstufengetriebe, welches vorzugsweise eine den Wirkungsgrad verbessernde Betätigung der Schaltelemente durch eine von außerhalb gute Erreichbarkeit der Schaltelemente ermöglicht. Ferner werden durch die erfindungsgemäß ausgewählten Verbindungen zwischen den Getriebeelementen eine optimierte Übersetzungsreihe und niedrige Absolut- und Relativdrehzahlen sowie niedrige Planetenradsatz- und Schaltelementmorriente bei dem vorgeschlagenen Mehrstufengetriebe realisiert. Zudem ergeben sich aus der Radsatzanordnung verbesserte Verzahnungswirkungsgrade und geringe Bauteilbelastungen bei geringem Bauaufwand, so dass die Herstellungskosten und das Gewicht des Mehrstufengetriebes in vorteilhafter Weise reduziert werden.

Unter verbunden wird hier insbesondere verstanden, dass die verbundenen Elemente direkt miteinander über genau eine Welle verbunden sind.

Verbindbar bedeutet insbesondere, dass die miteinander verbindbaren Elemente über eine Welle miteinander verbunden sind, welche durch zumindest ein Schaltelement zeitweise unterbrochen werden kann.

Die gute Erreichbarkeit der Schaltelemente wird unter anderem einerseits durch die Verwendung von Bremsen als Schaltelemente und andererseits auch durch Kupplungen als Schaltelemente realisiert, die an außen liegenden Wellen vorzugsweise am Antrieb und Abtrieb bei dem erfindungsgemäßen Mehrstufengetriebe positioniert sind.

Die Planetenradsätze können in axialer Richtung betrachtet in der Reihenfolge erster Planetenradsatz, zweiter Planetenradsatz dritter Planetenradsatz und vierter Planetenradsatz angeordnet, wobei der erste, dritte und vierte Planetenradsatz vorzugsweise jeweils als Minus-Planetenradsatz ausgebildet sind, während der zweite Planetenradsatz vorzugsweise als Plus-Planetenradsatz ausgeführt ist. Es ist jedoch möglich, an Stellen, wo es die Bindbarkeit zulässt, einzelne oder mehrere der Minus-Planetenradsätze in Plus-Planetenradsätze umzuwandeln, wenn gleichzeitig die Steg- und Hohlradanbindung getauscht und der Betrag der Standardübersetzung um den Wert eins erhöht wird, bzw. umgekehrt den Plus-Planetenradsatz als Minus-Planetenradsatz auszuführen. Ein Minus-Planetenradsatz weist bekanntlich an dem Planetenradträger verdrehbar gelagerte Planetenräder auf, die mit dem Sonnenrad und dem Hohlrad dieses Planetenradsatzes kämmen, so dass sich das Hohlrad bei festgehaltenem Planetenradträger und drehendem Sonnenrad in zur Sonnenraddrehrichtung entgegengesetzter Richtung dreht. Ein Plus-Planetenradsatz weist bekanntlich an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, so dass sich das Hohlrad bei festgehaltenem Planetenradträger und drehendem Sonnenrad in zur Sonnenraddrehrichtung gleicher Richtung dreht.

Bei gleichbleibenden Verbindungen der einzelnen Elemente untereinander ist auch eine andere Reihenfolge der Planetenradsätze möglich.

Im Rahmen vorteilhafter Ausführungsvarianten der vorliegenden Erfindung kann vorgesehen sein, dass vorzugsweise für das erste Schaltelement verschiedene Anordnungspositionen möglich sind, die wirkungsgleich ausgestaltete Radsatzalternativen darstellen. Hierbei wird im Wesentlichen anstelle einer lösbaren Verbindung zwischen Antriebswelle und Sonnenrad des dritten Planetenradsatzes eine feste Verbindung vorgesehen, wobei über das erste Schaltelement die lösbare Verbindung an anderer vorbestimmter Position zwischen Getriebeelementen in dem Mehrstufengetriebe realisiert wird. Beispielsweise kann diese lösbare Verbindung zwischen dem Planetenradträger des dritten Planetenradsatzes und dem Hohlrad des vierten Planetenradsatzes bzw. der Abtriebswelle vorgesehen sein. Es ist auch denkbar, dass die lösbare Verbindung zwischen den Hohlrädern des zweiten und dritten Planetenradsatzes angeordnet ist. Möglich ist die lösbare Verbindung auch zwischen den Planetenradträgern des ersten und zweiten Planetenradsatzes bzw. der Antriebswelle. Schließlich ist es auch denkbar, dass die lösbare Verbindung zwischen einerseits dem Hohlrad des ersten Planetenradsatzes und dem Planetenträger des vierten Planetenradsatzes und andererseits dem Sonnenrad des zweiten Planetenradsatzes angeordnet wird.

Unter dem Begriff Schaltelement ist eine schaltbare Verbindung zwischen zwei Elementen des Getriebes zu verstehen, wobei das zwischen diesen beiden Elementen zu übertragene Drehmoment mittels Kraftschluss bzw. Reibschluss oder mittels Formschluss übertragen wird. Sind beide Elemente der schaltbaren Verbindung rotierbar ausgeführt, so wird das Schaltelement als Kupplung bezeichnet und wenn nur eines der beiden Elemente der schaltbaren Verbindung rotiert, wird das Schaltelement als Bremse bezeichnet. Darüber hinaus ist auch die geometrische Lage bzw. Reihenfolge der einzelnen Schaltelemente frei wählbar, so lange es die Bindbarkeit der Elemente zulässt. Auf diese Weise können einzelne Elemente beliebig in ihrer Lage verschoben werden. Ausführungsbeispiel eines kraftschlüssigen Schaltelements sind Lamellenkupplungen oder -bremsen, Bandbremsen, Konuskupplungen oder -bremsen, elektromagnetische Kupplungen, Magnetpulverkupplungen und elektro-rheologische Kupplung. Ausführungsbeispiele für ein formschlüssiges Schaltelement sind Klauenkupplungen oder -bremsen und Zahnkupplungen.

Vorzugsweise können aufgrund ihrer Charakteristik vor allem das erste Schaltelement und das fünfte Schaltelement als formschlüssige Schaltelemente ausgeführt sein, wodurch deutliche Verbrauchsvorteile erreicht werden.

Das erfindungsgemäß vorgeschlagene Mehrstufengetriebe kann aufgrund der koaxialen Anordnung von Antrieb und Abtrieb zur Realisierung eines Standardantriebes bei einem Fahrzeug eingesetzt werden. Es ist jedoch auch möglich, dass eine Front-Querbauweise mit dem Planetengetriebe an einem Fahrzeug realisiert wird, indem die geometrische Anordnung und damit die Reihenfolge der Elemente des Planetengetriebes, wie zum Beispiel die Anordnung der einzelnen Planetenradsätze und der Schaltelemente verändert wird, soweit es die Bindbarkeit der Getriebeelemente zulässt, so dass dann beispielsweise der Antrieb und der Abtrieb zueinander versetzt angeordnet wird.

Als Anfahrelement können bei dem erfindungsgemäßen Mehrstufengetriebe ein hydrodynamischer Drehmomentwandler oder eine hydrodynamische Kupplung eingesetzt werden. Es ist auch denkbar, dass eine zusätzliche Anfahrkupplung oder auch eine integrierte Anfahrkupplung oder Anfahrbremse verwendet werden. Ferner ist möglich, dass an zumindest einer der Wellen eine elektrische Maschine oder eine sonstige Kraft-/Leistungsquelle angeordnet wird. Darüber hinaus kann an zumindest einer der Wellen ein Freilauf zum Gehäuse oder zu einer anderen Welle angeordnet werden.

Nachfolgend wird die vorliegende Erfindung anhand der Zeichnung weiter erläutert. Es zeigen:
Figur 1 eine schematische Ansicht einer ersten Ausführungsvariante eines erfindungsgemäßen Mehrstufengetriebes mit vier alternativen Anordnungspositionen eines ersten Schaltelements;
Figur 2 eine schematische Ansicht einer zweiten Ausführungsvariante des Mehrstufengetriebes;
Figur 3 eine schematische Ansicht einer dritten Ausführungsvariante des Mehrstufengetriebes;
Figur 4 eine schematische Ansicht einer vierten Ausführungsvariante des Mehrstufengetriebes;
Figur 5 eine schematische Ansicht einer fünften Ausführungsvariante des Mehrstufengetriebe; und
Figur 6 ein Schaltschema für die verschiedenen Ausführungsvarianten des Mehrstufengetriebes.

In den Figuren sind verschiedene Ausführungsvarianten eines erfindungsgemäßen Mehrstufengetriebes in Planetenbauweise, zum Beispiel als automatisches Getriebe bzw. Automatgetriebe, für ein Fahrzeug beispielhaft dargestellt.

Unabhängig von den jeweiligen Ausführungsvarianten umfasst das Mehrstufengetriebe ein Gehäuse 9 mit vier Planetenradsätzen RS1, RS2, RS3, RS4 und mit sechs Schaltelementen A, B, C, D, E, F sowie mit acht drehbaren Wellen 1, 2, 3, 4, 5, 6, 7, 8, 8A, 8B, 8C, 8D, wobei unter dem Begriff Welle ein oder mehrere Bauteile beliebiger konstruktiver Form zu verstehen sind, die zumindest zwei Elemente des Mehrstufengetriebes verbinden bzw. koppeln. Bei dem vorgeschlagenen Mehrstufengetriebe sind vorgesehene Gehäusekopplungen über als Bremse ausgeführte Schaltelemente realisiert, so dass keine festen Gehäusekopplungen vorgesehen sind.

Als Planetenradsätze werden z. B. Minus-Planetenradsätze und ein Plus-Planetenradsatz eingesetzt, wobei bei den gezeigten Ausführungsvarianten der erste, dritte und vierte Planetenradsatz RS1, RS3, RS4 jeweils als Minus-Planetenradsatz und der zweite Planetenradsatz RS2 als Plus-Planetenradsatz ausgeführt sind. Ferner sind das erste, zweite und dritte Schaltelement A, B, C jeweils als Kupplungen und das vierte, fünfte und sechste Schaltelement D, E, F jeweils als Bremsen ausgeführt. Hierbei sind z. B. Lamellenbremsen bzw. -kupplungen dargestellt, wobei vorzugsweise das erste Schaltelement A und das fünfte Schaltelement E als Klauenschaltelemente zur Verbrauchseinsparung ausgeführt sind.

Erfindungsgemäß ist bei dem Mehrstufengetriebe vorgesehen, dass die erste Welle 1 als Antrieb An mit dem Sonnenrad S03 des dritten Planetenradsatzes RS3 direkt verbunden oder indirekt verbindbar ist. Dies bedeutet, dass die erste Welle 1 entweder ohne weitere Elemente, also direkt mit dem Sonnenrad SO3 verbunden ist oder dass die erste Welle 1 indirekt, also zum Beispiel über das erste Schaltelement A und eine weitere Welle 8 mit dem Sonnenrad SO3 lösbar verbunden ist. Die erste Welle 1 ist mit dem Sonnenrad SO1 des ersten Planetenradsatzes RS1 und mit dem Planetenradträger PT1 des ersten Planetenradsatzes RS1 sowie mit den Planetenradträger PT2 des zweiten Planetenradsatzes RS1, RS2 jeweils indirekt verbindbar. Die zweite Welle 2 als Abtrieb Ab ist mit dem Hohlrad H04 des vierten Planetenradsatzes RS4 direkt verbunden. Dies bedeutet, dass die zweite Welle 2 ohne weitere Elemente, also direkt mit dem Hohlrad H04 verbunden ist. Die zweite Welle 2 ist ferner mit dem Planetenradträger PT3 des dritten Planetenradsatzes RS3 direkt verbunden oder indirekt verbindbar. Dies bedeutet, dass die zweite Welle 2 entweder ohne weitere Elemente, also direkt mit dem Planetenradträger PT3 verbunden ist oder dass die zweite Welle 2 über zum Beispiel das erste Schaltelement A und eine weitere Welle 8A mit dem Planetenradträger PT3 lösbar verbunden ist. Darüber hinaus ist das Sonnenrad SO1 und der Planetenradträger PT1 des ersten Planetenradsatzes RS1 sowie das Sonnenrad S04 des vierten Planetenradsatzes RS4 jeweils mit dem Gehäuse 9 verbindbar. Zudem ist das Hohlrad HO1 des ersten Planetenradsatzes RS1 mit dem Planetenradträger PT4 des vierten Planetenradsatzes RS4 verbunden und mit dem Sonnenrad S02 des zweiten Planetenradsatzes RS2 verbindbar oder verbunden. Schließlich sind das Hohlrad HO2 des zweiten Planetenradsatzes RS2 und das Hohlrad HO3 des dritten Planetenradsatzes RS3 miteinander verbindbar oder verbunden.

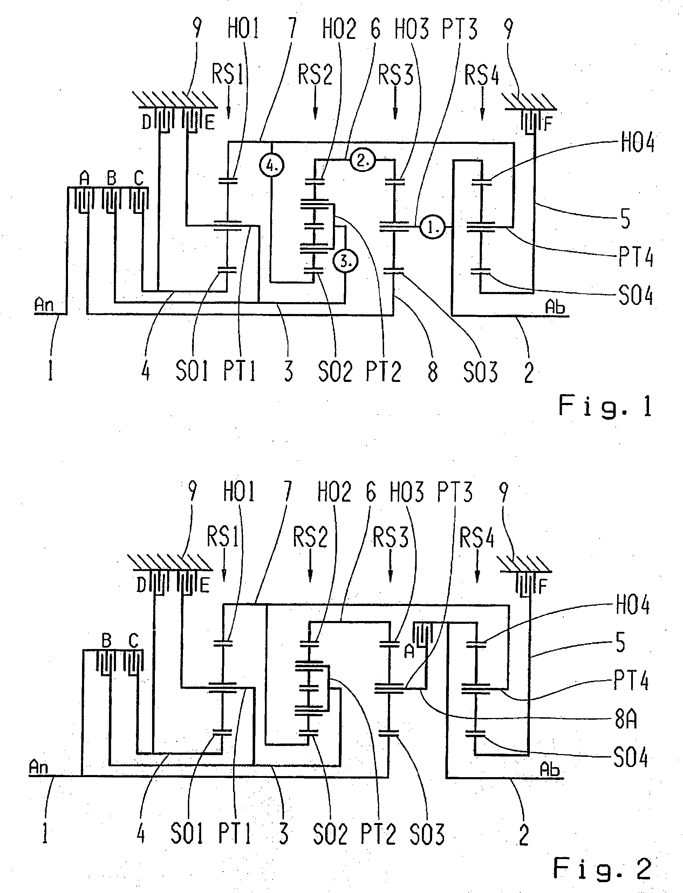

Aus den beschriebenen Verbindungsmöglichkeiten ergeben sich vier wirkungsgleiche Anordnungspositionen des ersten Schaltelementes A. Die alternativen Anordnungspositionen sind in fünf verschiedenen Ausführungsvarianten des Mehrstufengetriebes gemäß Figuren 1 bis 5 dargestellt.

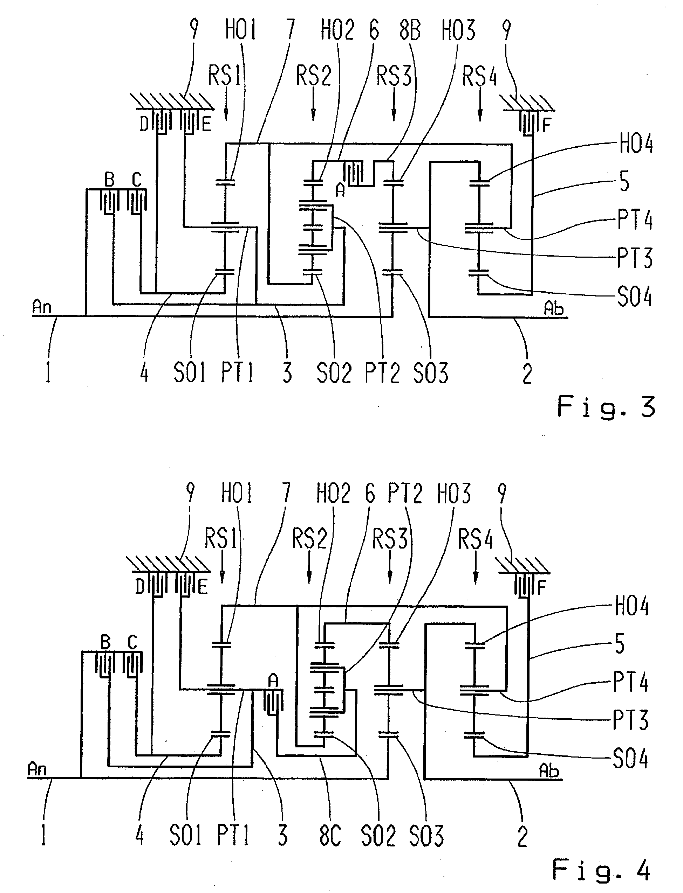

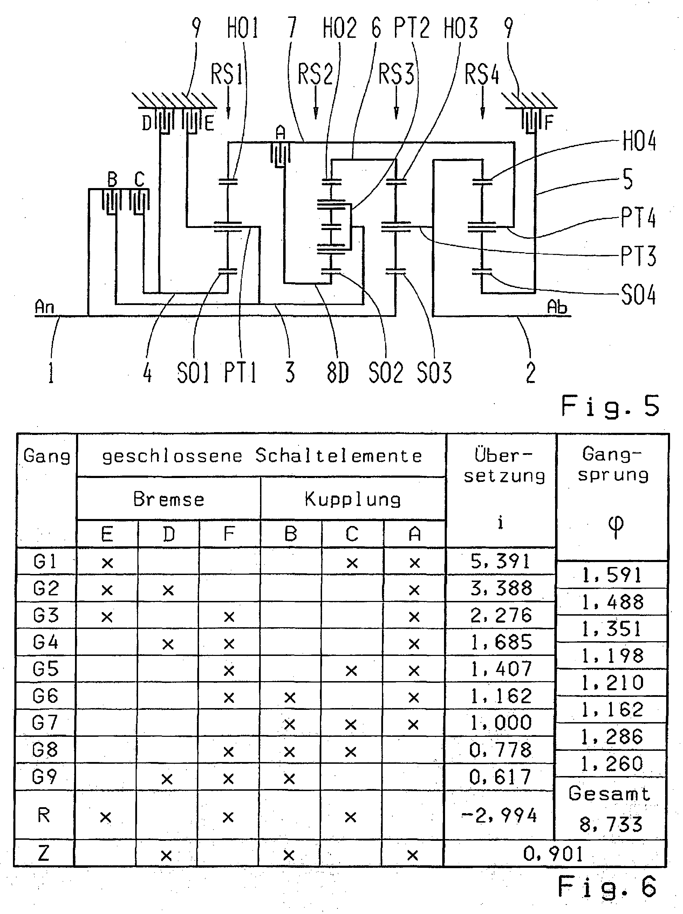

Figur 1 zeigt eine erste Ausführungsvariante, in der die vier weiteren Anordnungspositionen des ersten Schaltelements A mit 1. (entspricht der zweiten Ausführungsvariante gemäß Figur 2), 2. (entspricht der dritten Ausführungsvariante gemäß Figur 3), 3. (entspricht der vierten Ausführungsvariante gemäß Figur 4) und 4. (entspricht der fünften Ausführungsvariante gemäß Figur 5) bezeichnet sind.

Bei dem in Figur 1 dargestellten Radsatz gemäß der ersten Ausführungsvariante des Mehrstufengetriebes ist vorgesehen, dass die erste Welle 1 über das als Kupplung ausgeführte erste Schaltelement A und über die achte Welle 8 mit dem Sonnenrad S03 des dritten Planetenradsatzes RS3 verbindbar ist, welches bedeutet, das die erste Welle 1 mit dem Sonnenrad S03 lösbar verbunden ist. Ferner ist die erste Welle 1 über das als Kupplung ausgebildete zweite Schaltelement B und über die dritte Welle 3 mit dem Planetenradträger PT1 des ersten Planetenradsatzes RS1 und mit dem Planetenradträger PT2 des zweiten Planetenradsatzes RS2 verbindbar bzw. lösbar verbunden, wobei der Planetenradträger PT1 des ersten Planetenradsatzes RS1 über die dritte Welle 3 und über das als Bremse ausgeführte fünfte Schaltelement E mit dem Gehäuse 9 lösbar verbunden ist. Zudem ist die erste Welle 1 über das als Kupplung ausgebildete dritte Schaltelement C und über die vierte Welle 4 mit dem Sonnenrad SO1 des ersten Planetenradsatzes RS1 lösbar verbunden, wobei das Sonnenrad SO1 des ersten Planetenradsatzes RS1 über die vierte Welle 4 und das als Bremse ausgeführte vierte Schaltelement D mit dem Gehäuse 9 lösbar verbunden ist. Die zweite Welle 2 ist mit dem Hohlrad H04 des vierten Planetenradsatzes RS4 und mit dem Planetenradträger PT3 des dritten Planetenradsatzes RS3 verbunden. Das Hohlrad H01 des ersten Planetenradsatzes RS1 ist über die siebente Welle 7 mit dem Sonnenrad S02 des zweiten Planetenradsatzes RS2 und mit dem Planetenradträger PT4 des vierten Planetenradsatzes RS4 verbunden. Das Hohlrad H02 des zweiten Planetenradsatzes RS2 ist über die sechste Welle 6 mit dem Hohlrad H03 des dritten Planetenradsatzes RS3 verbunden. Das Sonnenrad S04 des vierten Planetenradsatzes RS4 ist über die fünfte Welle 5 und über das als Bremse ausgebildete sechste Schaltelement F mit dem Gehäuse lösbar verbunden.

Bei dem in Figur 2 dargestellten Radsatz gemäß der zweiten Ausführungsvariante des Mehrstufengetriebes ist vorgesehen, dass die erste Welle 1 mit dem Sonnenrad S3 des dritten Planetenradsatzes RS3 verbunden ist. Ferner ist die erste Welle 1 über das als Kupplung ausgebildete zweite Schaltelement B und über die dritte Welle 3 mit dem Planetenradträger PT1 des ersten Planetenradsatzes RS1 und mit dem Planetenradträger PT2 des zweiten Planetenradsatzes RS2 verbindbar bzw. lösbar verbunden, wobei der Planetenradträger PT1 des ersten Planetenradsatzzes RS1 über die dritte Welle 3 und über das als Bremse ausgebildete fünfte Schaltelement E mit dem Gehäuse 9 lösbar verbunden ist. Darüber hinaus ist die erste Welle 1 über das als Kupplung ausgebildete dritte Schaltelement C und über die vierte Welle 4 mit dem Sonnenrad S01 des ersten Planetenradsatzes RS1 lösbar verbunden, wobei das Sonnenrad S01 des ersten Planetenradsatzes RS1 über die vierte Welle 4 und über das als Bremse ausgeführte vierte Schaltelement D mit dem Gehäuse 9 lösbar verbunden ist. Die zweite Welle 2 ist mit dem Hohlrad H04 des vierten Planetenradsatzes RS4 verbunden. Ferner ist die zweite Welle 2 über das als Kupplung ausgebildete erste Schaltelement A und über die Welle 8A mit dem Planetenradträger PT3 des dritten Planetenradsatzes RS3 lösbar verbunden. Das Hohlrad H01 des ersten Planetenradsatzes RS1 ist über die siebente Welle 7 mit dem Sonnenrad S02 des zweiten Planetenradsatzes RS2 und mit dem Planetenradträger PT4 des vierten Planetenradsatzes RS4 verbunden. Das Hohlrad H02 des zweiten Planetenradsatzes RS2 ist über die sechste Welle 6 mit dem Hohlrad HO3 des dritten Planetenradsatzes RS3 verbunden. Das Sonnenrad S04 des vierten Planetenradsatzes RS4 ist über die fünfte Welle 5 und über das als Bremse ausgebildete sechste Schaltelement F mit dem Gehäuse lösbar verbunden.

Bei dem in Figur 3 dargestellten Radsatz gemäß der dritten Ausführungsvariante ist vorgesehen, dass die erste Welle 1 mit dem Sonnenrad S03 des dritten Planetenradsatzes RS3 verbunden ist. Ferner ist die erste Welle 1 über das als Kupplung ausgebildete zweite Schaltelement B und über die dritte Welle 3 mit dem Planetenradträger PT1 des ersten Planetenradsatzes RS1 und mit dem Planetenradträger PT2 des zweiten Planetenradsatzes RS2 lösbar verbunden, wobei der Planetenradträger PT1 des ersten Planetenradsatzes RS1 über die dritte Welle 3 und über das als Bremse ausgebildete fünfte Schaltelement E mit dem Gehäuse 9 lösbar verbunden ist. Darüber hinaus ist die erste Welle 1 über das als Kupplung ausgebildete dritte Schaltelement C und über die vierte Welle 4 mit dem Sonnenrad SO1 des ersten Planetenradsatzes RS1 lösbar verbunden, wobei das Sonnenrad SO1 des ersten Planetenradsatzes RS1 über die vierte Welle 4 und über das als Bremse ausgeführte vierte Schaltelement D mit dem Gehäuse 9 lösbar verbunden ist. Die zweite Welle 2 ist mit dem Hohlrad H04 des vierten Planetenradsatzes RS4 und mit dem Planetenradträger PT3 des dritten Planetenradsatzes RS3 verbunden. Das Hohlrad H01 des ersten Planetenradsatzes RS1 ist über die siebente Welle 7 mit dem Sonnenrad S02 des zweiten Planetenradsatzes RS2 und mit dem Planetenradträger PT4 des vierten Planetenradsatzes RS4 verbunden. Das Hohlrad H02 des zweiten Planetenradsatzes RS2 ist über die sechste Welle 6 und über das als Kupplung ausgebildete erste Schaltelement A sowie über die achte Welle 8B mit dem Hohlrad H03 des dritten Planetenradsatzes RS3 lösbar verbunden. Das Sonnenrad S04 des vierten Planetenradsatzes RS4 ist über die fünfte Welle 5 und über das als Bremse ausgebildete sechste Schaltelement F mit dem Gehäuse 9 lösbar verbunden.

Bei dem in Figur 4 dargestellten Radsatz gemäß der vierten Ausführungsvariante ist vorgesehen, dass die erste Welle 1 mit dem Sonnenrad S03 des dritten Planetenradsatzes RS3 verbunden ist. Zudem ist die erste Welle 1 über das als Kupplung ausgebildete zweite Schaltelement B und über die dritte Welle 3 mit dem Planetenradträger PT1 des ersten Planetenradsatzes RS1 lösbar verbunden, wobei der Planetenträger PT1 des ersten Planetenradsatzes RS1 über die dritte Welle und über das als Bremse ausgebildete fünfte Schaltelement E mit dem Gehäuse 9 lösbar verbunden ist. Der Planetenradträger PT2 des zweiten Planetenradsatzes RS2 ist über die dritte Welle 3 und über das als Kupplung ausgebildete erste Schaltelement A sowie über die achte Welle 8C mit der ersten Welle 1 und dem Planetenträger PT1 des ersten Planetenradsatzes RS1 lösbar verbunden. Darüber hinaus ist die erste Welle 1 über das als Kupplung ausgebildete dritte Schaltelement C und über die vierte Welle 4 mit dem Sonnenrad S01 des ersten Planetenradsatzes RS1 lösbar verbunden, wobei das Sonnenrad S1 des ersten Planetenradsatzes RS1 über die vierte Welle 4 und über das als Bremse ausgeführte vierte Schaltelement D mit dem Gehäuse 9 lösbar verbunden ist. Die zweite Welle 2 ist mit dem Hohlrad HO4 des vierten Planetenradsatzes RS4 und mit dem Planetenradträger PT3 des dritten Planetenradsatzes RS3 verbunden. Das Hohlrad H01 des ersten Planetenradsatzes RS1 ist über die siebente Welle 7 mit dem Sonnenrad S02 des zweiten Planetenradsatzes RS2 und mit dem Planetenradträger PT4 des vierten Planetenradsatzes RS4 verbunden. Das Hohlrad H02 des zweiten Planetenradsatzes RS2 ist über die sechste Welle 6 mit dem Hohlrad HÖ3 des dritten Planetenradsatzes RS3 verbunden. Das Sonnenrad S04 des vierten Planetenradsatzes RS4 ist über die fünfte Welle 5 und über das als Bremse ausgebildete sechste Schaltelement F mit dem Gehäuse 9 lösbar verbunden.

Bei dem in Figur 5 dargestellten Radsatz gemäß der fünften Ausführungsvariante ist vorgesehen, dass die erste Welle 1 mit dem Sonnenrad S3 des dritten Planetenradsatzes RS3 verbunden. Ferner die erste Welle 1 über das als Kupplung ausgebildete zweite Schaltelement B und über die dritte Welle 3 mit dem Planetenradträger PT1 des ersten Planetenradsatzes RS1 und mit dem Planetenradträger PT2 des zweiten Planetenradsatzes RS2 lösbar verbunden, wobei der Planetenradträger PT1 des ersten Planetenradsatzes RS1 über die dritte Welle 3 und über das als Bremse ausgebildete Schaltelement E mit dem Gehäuse 9 lösbar verbunden ist. Die erste Welle 1 ist zudem über das als Kupplung ausgebildete dritte Schaltelement C und über die vierte Welle 4 mit dem Sonnenrad S01 des ersten Planetenradsatzes RS1 lösbar verbunden, wobei das Sonnenrad S01 des ersten Planetenradsatzes RS1 über die vierte Welle 4 und über das als Bremse ausgebildete vierte Schaltelement D mit dem Gehäuse 9 lösbar verbunden ist. Die zweite Welle 2 ist mit dem Hohlrad HO4 des vierten Planetenradsatzes RS4 und mit dem Planetenradträger PT3 des dritten Planetenradsatzes RS3 verbunden. Das Hohlrad H01 des ersten Planetenradsatzes RS1 ist über die siebente Welle 7 mit dem Planetenradträger PT4 des vierten Planetenradsatzes RS4 verbunden. Das Hohlrad H01 des ersten Planetenradsatzes RS1 und der Planetenradträger PT4 des vierten Planetenradsatzes RS4 sind über das als Kupplung ausgebildete erste Schaltelement A und über die achte Welle 8D mit dem Sonnenrad S02 des zweiten Planetenradsatzes RS2 lösbar verbunden. Das Hohlrad H02 des zweiten Planetenradsatzes RS2 ist über die sechste Welle 6 mit dem Hohlrad H03 des dritten Planetenradsatzes RS3 verbunden. Das Sonnenrad S04 des vierten Planetenradsatzes RS4 ist über die fünfte Welle 5 und über das als Bremse ausgebildete sechste Schaltelement F mit dem Gehäuse 9 lösbar verbunden.

In Figur 6 ist ein Schaltschema dargestellt, welches für die in den Figuren 1 bis 5 dargestellten wirkungsgleichen Radsätze gilt. In dem Schaltschema sind die zum Realisieren der verschiedenen Gangstufen zu schließenden bzw. zu aktivierenden Schaltelemente A, B, C, D, E, F tabellarisch dargestellt, wobei jeder Gangstufe eine Übersetzung i und zwischen verschiedenen Gangstufen der jeweilige Gangsprung ϕ angegeben sind. Neben den neun angegebenen Vorwärtsgangstufen G1, G2, G3, G4, G5, G6, G7, G8, G9 und der einen angegebenen Rückwärtsgangstufe R ist eine weitere zusätzliche Schaltkombination Z als weitere mögliche Gangstufe angegeben. Als bevorzugte Standübersetzungen können bei dem ersten Planetenradsatz RS1 ein Wert von etwa i₀ = -3,850, bei dem zweiten Planetenradsatz RS2 ein Wert von etwa i₀ = 1,670, bei dem dritten Planetenradsatz RS 3 ein Wert von etwa i₀ = -2,388 und bei dem vierten Radsatz RS4 ein Wert von etwa i₀ = -3,498 verwendet werden. Darüber hinaus ergibt sich aus dem Schaltschema, dass zum Schalten einer Gangstufe jeweils drei der Schaltelemente geschlossen sind. Zum Durchführen eines Gangstufenwechsels sind nur zwei gleichzeitig zuschaltende Schaltelemente vorgesehen.

Im Einzelnen ergibt sich aus dem Schaltschema gemäß Figur 6, das zum Realisieren der ersten Vorwärtsgangstufe G1 das erste Schaltelement A, das dritte Schaltelement C, und das fünfte Schaltelement E geschlossen sind. Zum Realisieren der zweiten Vorwärtsgangstufe G2 sind das erste Schaltelement A, das vierte Schaltelement D und das fünfte Schaltelement E geschlossen. Bei der dritten Vorwärtsgangstufe G3 sind das erste Schaltelement A, das fünfte Schaltelement E und das sechste Schaltelement F geschlossen. Zum Realisieren der vierten Vorwärtsgangstufe G4 sind das erste Schaltelement A, das vierte Schaltelement D und das sechste Schaltelement F geschlossen. Bei der fünften Vorwärtsgangstufe G5 sind das erste Schaltelement A, das dritte Schaltelement C und das sechste Schaltelement F geschlossen. Bei der sechsten Vorwärtsgangstufe G6 sind das erste Schaltelement A, das zweite Schaltelement B und das die sechste Schaltelement F geschlossen. Zum Realisieren der siebenten Vorwärtsgangstufe G7 sind das erste Schaltelement A, das zweite Schaltelement B und das dritte Schaltelement C geschlossen. Zum Realisieren der achten Vorwärtsgangstufe G8 sind das zweite Schaltelement B, das dritte Schaltelement C und das sechste Schaltelement F geschlossen. Für die neunte Vorwärtsgangstufe G9 sind das zweite Schaltelement B, das vierte Schaltelement D und das sechste Schaltelement F geschlossen. Für die Rückwärtsgangstufe R sind das dritte Schaltelement C, das fünfte Schaltelement E und das sechste Schaltelement F geschlossen. Bei der zusätzlichen Gangstufe Z sind das erste Schaltelement A, das zweite Schaltelement B und das vierte Schaltelement D geschlossen.

### Bezugszeichen

- 1: erste Welle als Antrieb
- 2: zweite Welle als abtrieb
- 3: dritte Welle
- 4: vierte Welle
- 5: fünfte Welle
- 6: sechste Welle
- 7: siebente Welle
- 8,8A,8B,8C,8D: achte Welle
- 9: Gehäuse
- A erstes: Schaltelement
- B: zweites Schaltelement
- C: drittes Schaltelement
- D: viertes Schaltelement
- E: fünftes Schaltelement
- F: sechstes Schaltelement
- RS1: erster Planetenradsatz
- RS2: zweiter Planetenradsatz
- RS3: dritter Planetenradsatz
- RS4: vierter Planetenradsatz
- SO1: Sonnenrad des ersten Planetenradsatzes
- PT1: Planetenradträger des ersten Planetenradsatzes
- HO1: Hohlrad des ersten Planetenradsatzes
- SO2: Sonnenrad des zweiten Planetenradsatzes
- PT2: Planetenradträger des zweiten Planetenradsatzes
- HO2: Hohlrad des zweiten Planetenradsatzes
- SO3: Sonnenrad des dritten Planetenradsatzes
- PT₃: Planetenradträger des dritten Planetenradsatzes
- HO3: Hohlrad des dritten Planetenradsatzes
- SO4: Sonnenrad des vierten Planetenradsatzes
- PT4: Planetenradträger des vierten Planetenradsatzes
- HO4: Hohlrad des vierten Planetenradsatzes
- G1: erste Vorwärtsgangstufe
- G2: zweite Vorwärtsgangstufe
- G3: dritte Vorwärtsgangstufe
- G4: vierte Vorwärtsgangstufe
- G5: fünfte Vorwärtsgangstufe
- G6: sechste Vorwärtsgangstufe
- G7: siebente Vorwärtsgangstufe
- G8: achte Vorwärtsgangstufe
- G9: neunte Vorwärtsgangstufe
- R: Rückwärtsgangstufe
- Z: zusätzliche Gangstufe
- 1.: erste alternative Anordnungsposition des ersten Schaltelements
- 2.: zweite alternative Anordnungsposition des ersten Schaltelements
- 3.: dritte alternative Anordnungsposition des ersten Schaltelements
- 4.: vierte Alternative Anordnungsposition des ersten Schaltelements
- i: Übersetzung
- i₀: Standübersetzung eines Planetenradsatzes
- ϕ: Gangsprung

## Patentansprüche

1. Mehrstufengetriebe in Planetenbauweise für ein Fahrzeug mit einem Gehäuse (9), in dem vier Planetenradsätze (RS1, RS2, RS3, RS4) und mehrere Wellen (1, 2, 3, 4, 5, 6, 7, 8) sowie sechs Schaltelemente (A, B, C, D, E, F) angeordnet sind, durch deren Betätigung mehrere Gangstufen realisierbar sind, **dadurch gekennzeichnet, dass** eine erste Welle (1) als Antrieb (An) mit einem Sonnenrad (S03) des dritten Planetenradsatzes (RS3) indirekt verbindbar ist, mit einem Sonnenrad (SO1) des ersten Planetenradsatzes (RS1) indirekt verbindbar ist, mit einem Planetenradträger (PT1) des ersten Planetenradsatzes (RS1) indirekt verbindbar ist und mit einem Planetenradträger (PT2) des zweiten Planetenradsatzes (RS2) indirekt verbindbar ist, dass eine zweite Welle (2) als Abtrieb (Ab) mit einem Hohlrad (H04) des vierten Planetenradsatzes (RS4) direkt verbunden ist und mit einem Planetenradträger (PT3) des dritten Planetenradsatzes (RS3) direkt verbunden ist, dass das Sonnenrad (SO1) und der Planetenradträger (PT1) des ersten Planetenradsatzes (RS1) sowie ein Sonnenrad (S04) des vierten Planetenradsatzes (RS4) jeweils mit dem Gehäuse (9) verbindbar sind, dass ein Hohlrad (H01) des ersten Planetenradsatzes (RS1) mit einem Planetenradträger (PT4) des vierten Planetenradsatzes (RS4) verbunden und mit einem Sonnenrad (S02) des zweiten Planetenradsatzes (RS2) verbunden ist, und dass ein Hohlrad (HO2) des zweiten Planetenradsatzes (RS2) und ein Hohlrad (H03) des dritten Planetenradsatzes (RS3) miteinander verbunden sind.

2. Mehrstufengetriebe in Planetenbauweise für ein Fahrzeug mit einem Gehäuse (9), in dem vier Planetenradsätze (RS1, RS2, RS3, RS4) und mehrere Wellen (1, 2, 3, 4, 5, 6, 7, 8A) sowie sechs Schaltelemente (A, B, C, D, E, F) angeordnet sind, durch deren Betätigung mehrere Gangstufen realisierbar sind, **dadurch gekennzeichnet, dass** eine erste Welle (1) als Antrieb (An) mit einem Sonnenrad (SO3) des dritten Planetenradsatzes (RS3) direkt verbunden ist, mit einem Sonnenrad (SO1) des ersten Planetenradsatzes (RS1) indirekt verbindbar ist, mit einem Planetenradträger (PT1) des ersten Planetenradsatzes (RS1) indirekt verbindbar ist und mit einem Planetenradträger (PT2) des zweiten Planetenradsatzes (RS2) indirekt verbindbar ist, dass eine zweite Welle (2) als Abtrieb (Ab) mit einem Hohlrad (H04) des vierten Planetenradsatzes (RS4) direkt verbunden ist und mit einem Planetenradträger (PT3) des dritten Planetenradsatzes (RS3) indirekt verbindbar ist, dass das Sonnenrad (SO1) und der Planetenradträger (PT1) des ersten Planetenradsatzes (RS1) sowie ein Sonnenrad (S04) des vierten Planetenradsatzes (RS4) jeweils mit dem Gehäuse (9) verbindbar sind, dass ein Hohlrad (H01) des ersten Planetenradsatzes (RS1) mit einem Planetenradträger (PT4) des vierten Planetenradsatzes (RS4) verbunden und mit einem Sonnenrad (S02) des zweiten Planetenradsatzes (RS2) verbunden ist, und dass ein Hohlrad (H02) des zweiten Planetenradsatzes (RS2) und ein Hohlrad (H03) des dritten Planetenradsatzes (RS3) miteinander verbunden sind.

3. Mehrstufengetriebe in Planetenbauweise für ein Fahrzeug mit einem Gehäuse (9), in dem vier Planetenradsätze (RS1, RS2, RS3, RS4) und mehrere Wellen (1, 2, 3, 4, 5, 6, 7, 8B) sowie sechs Schaltelemente (A, B, C, D, E, F) angeordnet sind, durch deren Betätigung mehrere Gangstufen realisierbar sind, **dadurch gekennzeichnet, dass** eine erste Welle (1) als Antrieb (An) mit einem Sonnenrad (S03) des dritten Planetenradsatzes (RS3) direkt verbunden ist, mit einem Sonnenrad (SO1) des ersten Planetenradsatzes (RS1) indirekt verbindbar ist, mit einem Planetenradträger (PT1) des ersten Planetenradsatzes (RS1) indirekt verbindbar ist und mit einem Planetenradträger (PT2) des zweiten Planetenradsatzes (RS2) indirekt verbindbar ist, dass eine zweite Welle (2) als Abtrieb (Ab) mit einem Hohlrad (H04) des vierten Planetenradsatzes (RS4) direkt verbunden ist und mit einem Planetenradträger (PT3) des dritten Planetenradsatzes (RS3) direkt verbunden ist, dass das Sonnenrad (SO1) und der Planetenradträger (PT1) des ersten Planetenradsatzes (RS1) sowie ein Sonnenrad (S04) des vierten Planetenradsatzes (RS4) jeweils mit dem Gehäuse (9) verbindbar sind, dass ein Hohlrad (H01) des ersten Planetenradsatzes (RS1) mit einem Planetenradträger (PT4) des vierten Planetenradsatzes (RS4) verbunden und mit einem Sonnenrad (S02) des zweiten Planetenradsatzes (RS2) verbunden ist, und dass ein Hohlrad (H02) des zweiten Planetenradsatzes (RS2) und ein Hohlrad (H03) des dritten Planetenradsatzes (RS3) miteinander verbindbar sind.

4. Mehrstufengetriebe in Planetenbauweise für ein Fahrzeug mit einem Gehäuse (9), in dem vier Planetenradsätze (RS1, RS2, RS3, RS4) und mehrere Wellen (1, 2, 3, 4, 5, 6, 7, 8C) sowie sechs Schaltelemente (A, B, C, D, E, F) angeordnet sind, durch deren Betätigung mehrere Gangstufen realisierbar sind, **dadurch gekennzeichnet, dass** eine erste Welle (1) als Antrieb (An) mit einem Sonnenrad (S03) des dritten Planetenradsatzes (RS3) direkt verbunden ist, mit einem Sonnenrad (SO1) des ersten Planetenradsatzes (RS1) indirekt verbindbar ist, mit einem Planetenradträger (PT1) des ersten Planetenradsatzes (RS1) indirekt verbindbar ist und mit einem Planetenradträger (PT2) des zweiten Planetenradsatzes (RS2) indirekt verbindbar ist, dass eine zweite Welle (2) als Abtrieb (Ab) mit einem Hohlrad (H04) des vierten Planetenradsatzes (RS4) direkt verbunden ist und mit einem Planetenradträger (PT3) des dritten Planetenradsatzes (RS3) direkt verbunden ist, dass das Sonnenrad (SO1) und der Planetenradträger (PT1) des ersten Planetenradsatzes (RS1) sowie ein Sonnenrad (S04) des vierten Planetenradsatzes (RS4) jeweils mit dem Gehäuse (9) verbindbar sind, dass ein Hohlrad (HO1) des ersten Planetenradsatzes (RS1) mit einem Planetenradträger (PT4) des vierten Planetenradsatzes (RS4) verbunden und mit einem Sonnenrad (S02) des zweiten Planetenradsatzes (RS2) verbunden ist, und dass ein Hohlrad (HO2) des zweiten Planetenradsatzes (RS2) und ein Hohlrad (H03) des dritten Planetenradsatzes (RS3) miteinander verbunden sind.

5. Mehrstufengetriebe in Planetenbauweise für ein Fahrzeug mit einem Gehäuse (9), in dem vier Planetenradsätze (RS1, RS2, RS3, RS4) und mehrere Wellen (1, 2, 3, 4, 5, 6, 7, 8D) sowie sechs Schaltelemente (A, B, C, D, E, F) angeordnet sind, durch deren Betätigung mehrere Gangstufen realisierbar sind, **dadurch gekennzeichnet, dass** eine erste Welle (1) als Antrieb (An) mit einem Sonnenrad (S03) des dritten Planetenradsatzes (RS3) direkt verbunden ist, mit einem Sonnenrad (SO1) des ersten Planetenradsatzes (RS1) indirekt verbindbar ist, mit einem Planetenradträger (PT1) des ersten Planetenradsatzes (RS1) indirekt verbindbar ist und mit einem Planetenradträger (PT2) des zweiten Planetenradsatzes (RS2) indirekt verbindbar ist, dass eine zweite Welle (2) als Abtrieb (Ab) mit einem Hohlrad (HO4) des vierten Planetenradsatzes (RS4) direkt verbunden ist und mit einem Planetenradträger (PT13) des dritten Planetenradsatzes (RS3) direkt verbunden ist, dass das Sonnenrad (SO1) und der Planetenradträger (PT1) des ersten Planetenradsatzes (RS1) sowie ein Sonnenrad (S04) des vierten Planetenradsatzes (RS4) jeweils mit dem Gehäuse (9) verbindbar sind, dass ein Hohlrad (H01) des ersten Planetenradsatzes (RS1) mit einem Planetenradträger (PT4) des vierten Planetenradsatzes (RS4) verbunden und mit einem Sonnenrad (S02) des zweiten Planetenradsatzes (RS2) verbindbar ist, und dass ein Hohlrad (H02) des zweiten Planetenradsatzes (RS2) und ein Hohlrad (H03) des dritten Planetenradsatzes (RS3) miteinander verbunden sind.

6. Mehrstufengetriebe nach Anspruch 1, **dadurch gekennzeichnet, dass** die erste Welle (1) über das als Kupplung ausgeführte erste Schaltelement (A) und über eine achte Welle (8) mit dem Sonnenrad (SO3) des dritten Planetenradsatzes (RS3) verbindbar ist, dass die erste Welle (1) über das als Kupplung ausgebildete zweite Schaltelement (B) und über eine dritte Welle (3) mit dem Planetenradträger (PT1) des ersten Planetenradsatzes (RS1) und mit dem Planetenradträger (PT2) des zweiten Planetenradsatzes (RS2) verbindbar ist, wobei der Planetenradträger (PT1) des ersten Planetenradsatzes (RS1) über die dritte Welle (3) und über das als Bremse ausgeführte fünfte Schaltelement (E) mit dem Gehäuse (9) verbindbar ist, dass die erste Welle (1) über das als Kupplung ausgebildete dritte Schaltelement (C) und über eine vierte Welle (4) mit dem Sonnenrad (SO1) des ersten Planetenradsatzes (RS1) verbindbar ist, wobei das Sonnenrad (SO1) des ersten Planetenradsatzes (RS1) über die vierte Welle (4) und das als Bremse ausgeführte vierte Schaltelement (D) mit dem Gehäuse (9) verbindbar ist, dass die zweite Welle (2) mit dem Hohlrad (H04) des vierten Planetenradsatzes (RS4) und mit dem Planetenradträger (PT3) des dritten Planetenradsatzes (RS3) verbunden ist, dass das Hohlrad (HO1) des ersten Planetenradsatzes (RS1) über eine siebente Welle (7) mit dem Sonnenrad (S02) des zweiten Planetenradsatzes (RS2) und mit dem Planetenradträger (PT4) des vierten Planetenradsatzes (RS4) verbunden ist, dass das Hohlrad (H02) des zweiten Planetenradsatzes (RS2) über eine sechste Welle (6) mit dem Hohlrad (H03) des dritten Planetenradsatzes (RS3) verbunden ist, und dass das Sonnenrad (S04) des vierten Planetenradsatzes (RS4) über eine fünfte Welle (5) und über das als Bremse ausgebildete sechste Schaltelement (F) mit dem Gehäuse (9) verbindbar ist.

7. Mehrstufengetriebe nach Anspruch 2, **dadurch gekennzeichnet, dass** die erste Welle (1) mit dem Sonnenrad (S03) des dritten Planetenradsatzes (RS3) verbunden ist, dass die erste Welle (1) über das als Kupplung ausgebildete zweite Schaltelement (B) und über eine dritte Welle (3) unit dem Planetenradträger (PT1) des ersten Planetenradsatzes (RS1) und mit dem Planetenradträger (PT2) des zweiten Planetenradsatzes (RS2) verbindbar ist, wobei der Planetenradträger (PT1) des ersten Planetenradsatzes (RS1) über die dritte Welle (3) und über das als Bremse ausgebildete fünfte Schaltelement (E) mit dem Gehäuse (9) verbindbar ist, dass die erste Welle (1) über das als Kupplung ausgebildete dritte Schaltelement (C) und über eine vierte Welle (4) mit dem Sonnenrad (SO1) des ersten Planetenradsatzes (RS1) verbindbar ist, wobei das Sonnenrad (SO1) des ersten Planetenradsatzes (RS1) über die vierte Welle (4) und über das als Bremse ausgeführte vierte Schaltelement (D) mit dem Gehäuse (9) verbindbar ist, dass die zweite Welle (2) mit dem Hohlrad (H04) des vierten Planetenradsatzes (RS4) verbunden ist, dass die zweite Welle (2) über das als Kupplung ausgebildete erste Schaltelement (A) und über eine achte Welle (8A) mit dem Planetenradträger (PT3) des dritten Planetenradsatzes (RS3) verbindbar ist, dass das Hohlrad (H01) des ersten Planetenradsatzes (RS1) über eine siebente Welle (7) mit dem Sonnenrad (S02) des zweiten Planetenradsatzes (RS2) und mit dem Planetenradträger (PT4) des vierten Planetenradsatzes (RS4) verbunden ist, dass das Hohlrad (H02) des zweiten Planetenradsatzes (RS2) über eine sechste Welle (6) mit dem Hohlrad (H03) des dritten Planetenradsatzes (RS3) verbunden ist, und dass das Sonnenrad (S04) des vierten Planetenradsatzes (RS4) über eine fünfte Welle (5) und über das als Bremse ausgebildete sechste Schaltelement (F) mit dem Gehäuse (9) verbindbar ist.

8. Mehrstufengetriebe nach Anspruch 3, **dadurch gekennzeichnet, dass** die erste Welle (1) mit dem Sonnenrad (SO3) des dritten Planetenradsatzes (RS3) verbunden ist, dass die erste Welle (1) über das als Kupplung ausgebildete zweite Schaltelement (B) und über eine dritte Welle (3) mit dem Planetenradträger (PT1) des ersten Planetenradsatzes (RS1) und mit dem Planetenradträger (PT2) des zweiten Planetenradsatzes (RS2) verbindbar ist, wobei der Planetenradträger (PT1) des ersten Planetenradsatzes (RS1) über die dritte Welle (3) und über das als Bremse ausgebildete fünfte Schaltelement (E) mit dem Gehäuse (9) verbindbar ist, dass die erste Welle (1) über das als Kupplung ausgebildete dritte Schaltelement (C) und über eine vierte Welle (4) mit dem Sonnenrad (SO1) des ersten Planetenradsatzes (RS1) verbindbar ist, wobei das Sonnenrad (SO1) des ersten Planetenradsatzes (RS1) über die vierte Welle (4) und über das als Bremse ausgeführte vierte Schaltelement (D) mit dem Gehäuse (9) verbindbar ist, dass die zweite Welle (2) mit dem Hohlrad (H04) des vierten Planetenradsatzes (RS4) und mit dem Planetenradträger (PT3) des dritten Planetenradsatzes (RS3) verbunden ist, dass das Hohlrad (HO1) des ersten Planetenradsatzes (RS1) über eine siebente Welle (7) mit dem Sonnenrad (S02) des zweiten Planetenradsatzes (RS2) und mit dem Planetenradträger (PT4) des vierten Planetenradsatzes (RS4) verbunden ist, dass das Hohlrad (H02) des zweiten Planetenradsatzes (RS2) über eine sechste Welle (6) und über das als Kupplung ausgebildete erste Schaltelement (A) sowie über eine achte Welle (8B) mit dem Hohlrad (H03) des dritten Planetenradsatzes (RS3) verbindbar ist, und dass das Sonnenrad (SO4) des vierten Planetenradsatzes (RS4) über eine fünfte Welle (5) und über das als Bremse ausgebildete sechste Schaltelement (F) mit dem Gehäuse (9) verbindbar ist.

9. Mehrstufengetriebe nach Anspruch 4, **dadurch gekennzeichnet, dass** die erste Welle (1) mit dem Sonnenrad (S03) des dritten Planetenradsatzes (RS3) verbunden ist, dass die erste Welle (1) über das als Kupplung ausgebildete zweite Schaltelement (B) und über eine dritte Welle (3) mit dem Planetenradträger (PT1) des ersten Planetenradsatzes (RS1) verbindbar ist, wobei der Planetenradträger (PT1) des ersten Planetenradsatzes (RS1) über die dritte Welle (3) und über das als Bremse ausgebildete fünfte Schaltelement (E) mit dem Gehäuse (9) verbindbar ist, und wobei der Planetenradträger (PT2) des zweiten Planetenradsatzes (RS2) über die dritte Welle (3) und über das als Kupplung ausgebildete erste Schaltelement (A) sowie über eine achte Welle (8C) mit der ersten Welle (1) und dem Planetenradträger (PT1) des ersten Planetenradsatzes (RS1) verbindbar ist, dass die erste Welle (1) über das als Kupplung ausgebildete dritte Schaltelement (C) und über eine vierte Welle (4) mit dem Sonnenrad (SO1) des ersten Planetenradsatzes (RS1) verbindbar ist, wobei das Sonnenrad (SO1) des ersten Planetenradsatzes (RS1) über die vierte Welle (4) und über das als Bremse ausgeführte vierte Schaltelement (D) mit dem Gehäuse (9) verbindbar ist, dass die zweite Welle (2) mit dem Hohlrad (H04) des vierten Planetenradsatzes (RS4) und mit dem Planetenradträger (PT3) des dritten Planetenradsatzes (RS3) verbunden ist, dass das Hohlrad (H01) des ersten Planetenradsatzes (RS1) über eine siebente Welle (7) mit dem Sonnenrad (S02) des zweiten Planetenradsatzes (RS2) und mit dem Planetenradträger (PT4) des vierten Planetenradsatzes (RS4) verbunden ist, dass das Hohlrad (H02) des zweiten Planetenradsatzes (RS2) über eine sechste Welle (6) mit dem Hohlrad (HO3) des dritten Planetenradsatzes (RS3) verbunden ist, und dass das Sonnenrad (S04) des vierten Planetenradsatzes (RS4) über eine fünfte Welle (5) und über das als Bremse ausgebildete sechste Schaltelement (F) mit dem Gehäuse (9) verbindbar ist.

10. Mehrstufengetriebe nach Anspruch 5, **dadurch gekennzeichnet, dass** die erste Welle (1) mit dem Sonnenrad (SO3) des dritten Planetenradsatzes (RS3) verbunden ist, dass die erste Welle (1) über das als Kupplung ausgebildete zweite Schaltelement (B) und über eine dritte Welle (3) mit dem Planetenradträger (PT1) des ersten Planetenradsatzes (RS1) und mit dem Planetenradträger (PT2) des zweiten Planetenradsatzes (RS2) verbindbar ist, wobei der Planetenradträger (PT1) des ersten Planetenradsatzes (RS1) über die dritte Welle (3) und über das als Bremse ausgebildete fünfte Schaltelement (E) mit dem Gehäuse (9) verbindbar ist, dass die erste Welle (1) über das als Kupplung ausgebildete dritte Schaltelement (C) und über eine vierte Welle (4) mit dem Sonnenrad (SO1) des ersten Planetenradsatzes (RS1) verbindbar ist, wobei das Sonnenrad (SO1) des ersten Planetenradsatzes (RS1) über die vierte Welle (4) und über das als Bremse ausgebildete vierte Schaltelement (D) mit dem Gehäuse (9) verbindbar ist, dass die zweite Welle (2) mit dem Hohlrad (H04) des vierten Planetenradsatzes (RS4) und mit dem Planetenradträger (PT3) des dritten Planetenradsatzes (RS3) verbunden ist, dass das Hohlrad (H01) des ersten Planetenradsatzes (RS1) über eine siebente Welle (7) mit dem Planetenradträger (PT4) des vierten Planetenradsatzes (RS4) verbunden ist und über das als Kupplung ausgebildete erste Schaltelement (A) und über eine achte Welle (8D) mit dem Sonnenrad (S02) des zweiten Planetenradsatzes (RS2) verbindbar ist, dass das Hohlrad (H02) des zweiten Planetenradsatzes (RS2) über eine sechste Welle (6) mit dem Hohlrad (H03) des dritten Planetenradsatzes (RS3) verbunden ist, und dass das Sonnenrad (SO4) des vierten Planetenradsatzes (RS4) über eine fünfte Welle (5) und über das als Bremse ausgebildete sechste Schaltelement (F) mit dem Gehäuse (9) verbindbar ist.

11. Mehrstufengetriebe nach einem der vorangehenden Ansprüche, **dadurch gekennzeichnet, dass** zumindest neun Vorwärtsgangstufe (G1, G2, G3, G4, G5, G6, G7, G8, G9, Z) und zumindest eine Rückwärtsgangstufe (R) schaltbar sind, wobei zum Realisieren jeder Gangstufe mindestens drei der Schaltelemente (A, B, C, D, E, F) geschlossen sind.

12. Mehrstufengetriebe nach einem der vorangehenden Ansprüche, **dadurch gekennzeichnet, dass** das erste Schaltelement (A), das zweite Schaltelement (B) und das dritte Schaltelement (C) jeweils als Kupplung ausgeführt sind, wobei das vierte Schaltelement (D), das fünfte Schaltelement (E) und das sechste Schaltelement (F) jeweils als Bremse ausgeführt sind.

13. Mehrstufengetriebe nach Anspruch 12, **dadurch gekennzeichnet, dass** das erste Schaltelement (A) und/ oder das fünfte Schaltelement (E) als formschlüssige Schaltelemente ausgeführt sind.

14. Mehrstufengetriebe nach einem der vorangehenden Ansprüche, **dadurch gekennzeichnet, dass** der erste Planetenradsatz (RS1), der dritte Planetenradsatz (RS3) und der vierte Planetenradsatz (RS4) jeweils als Minus-Planetenradsatz und der zweite Planetenradsatz (RS2) als Plus-Planetenradsatz ausgeführt sind.

15. Mehrstufengetriebe nach einem der vorangehenden Ansprüche, **dadurch gekennzeichnet, dass** ein erster Gang (G1) durch das geschlossene fünfte (E), dritte (C) und erste (A) Schaltelement realisiert wird, ein zweiter Gang (G2) durch das geschlossene fünfte (E), vierte (D) und erste (A) Schaltelement, ein dritter Gang (G3) durch das geschlossene fünfte (E), sechste (F) und erste (A) Schaltelement, ein vierter Gang (G4) durch das geschlossene vierte (D), sechste (F) und erste (A) Schaltelement, ein fünfter Gang (G5) durch das geschlossene sechste (F), dritte (C) und erste (A) Schaltelement, ein sechster Gang (G6) durch das geschlossene sechste (F), zweite (B) und erste (A) Schaltelement, ein siebter Gang (G7) durch das geschlossene zweite (B), dritte (C) und erste (A) Schaltelement, ein achter Gang (G8) durch das geschlossene sechste (F), zweite (B) und dritte (C) Schaltelement, ein neunter Gang (G9) durch das geschlossene sechste (F), vierte (D) und zweite (B) Schaltelement, ein Rückwärtsgang (R) durch das geschlossene fünfte (E), sechste (F) und dritte (C) Schaltelement und ein alternativer Vorwärtsgang (Z) durch das geschlossene vierte (D), zweite (B) und erste (A) Schaltelement realisierbar ist, wobei alle übrigen Schaltelemente jeweils geöffnet sind.

16. Mehrstufengetriebe nach einem der Ansprüche 1 bis 5, **dadurch gekennzeichnet, dass** der Planetenradträger (PT1) des ersten Planetenradsatzes (RS1) und der Planetenradträger (PT2) des zweiten Planetenradsatzes direkt verbunden oder verbindbar sind.

## Claims

1. Multi-stage gear mechanism of planetary design for a vehicle, having a housing (9) in which four planetary gear sets (RS1, RS2, RS3, RS4) and a plurality of shafts (1, 2, 3, 4, 5, 6, 7, 8) and also six shifting elements (A, B, C, D, E, F) are arranged, it being possible for several gear stages to be realized by virtue of the said shifting elements being operated, **characterized in that** a first shaft (1) in the form of a drive (An) can be indirectly connected to a sun gear (SO3) of the third planetary gear set (RS3), can be indirectly connected to a sun gear (SO1) of the first planetary gear set (RS1), can be indirectly connected to a planetary gear carrier (PT1) of the first planetary gear set (RS1) and can be indirectly connected to a planetary gear carrier (PT2) of the second planetary gear set (RS2), **in that** a second shaft (2) in the form of an output drive (Ab) is directly connected to an internal gear (H04) of the fourth planetary gear set (RS4) and is directly connected to a planetary gear carrier (PT3) of the third planetary gear set (RS3), **in that** the sun gear (SO1) and the planetary gear carrier (PT1) of the first planetary gear set (RS1) and also a sun gear (S04) of the fourth planetary gear set (RS4) can each be connected to the housing (9), **in that** an internal gear (HO1) of the first planetary gear set (RS1) is connected to a planetary gear carrier (PT4) of the fourth planetary gear set (RS4) and is connected to a sun gear (S02) of the second planetary gear set (RS2), and **in that** an internal gear (H02) of the second planetary gear set (RS2) and an internal gear (H03) of the third planetary gear set (RS3) are connected to one another.

2. Multi-stage gear mechanism of planetary design for a vehicle, having a housing (9) in which four planetary gear sets (RS1, RS2, RS3, RS4) and a plurality of shafts (1, 2, 3, 4, 5, 6, 7, 8A) and also six shifting elements (A, B, C, D, E, F) are arranged, it being possible for several gear stages to be realized by virtue of the said shifting elements being operated, **characterized in that** a first shaft (1) in the form of a drive (An) is directly connected to a sun gear (S03) of the third planetary gear set (RS3), can be indirectly connected to a sun gear (SO1) of the first planetary gear set (RS1), can be indirectly connected to a planetary gear carrier (PT1) of the first planetary gear set (RS1) and can be indirectly connected to a planetary gear carrier (PT2) of the second planetary gear set (RS2), **in that** a second shaft (2) in the form of an output drive (Ab) is directly connected to an internal gear (H04) of the fourth planetary gear set (RS4) and can be indirectly connected to a planetary gear carrier (PT3) of the third planetary gear set (RS3), **in that** the sun gear (SO1) and the planetary gear carrier (PT1) of the first planetary gear set (RS1) and also a sun gear (S04) of the fourth planetary gear set (RS4) can each be connected to the housing (9), **in that** an internal gear (HO1) of the first planetary gear set (RS1) is connected to a planetary gear carrier (PT4) of the fourth planetary gear set (RS4) and is connected to a sun gear (S02) of the second planetary gear set (RS2), and **in that** an internal gear (H02) of the second planetary gear set (RS2) and an internal gear (H03) of the third planetary gear set (RS3) are connected to one another.

3. Multi-stage gear mechanism of planetary design for a vehicle, having a housing (9) in which four planetary gear sets (RS1, RS2, RS3, RS4) and a plurality of shafts (1, 2, 3, 4, 5, 6, 7, 8B) and also six shifting elements (A, B, C, D, E, F) are arranged, it being possible for several gear stages to be realized by the said shifting elements being operated, **characterized in that** a first shaft (1) in the form of a drive (An) is directly connected to a sun gear (S03) of the third planetary gear set (RS3), can be indirectly connected to a sun gear (SO1) of the first planetary gear set (RS1), can be indirectly connected to a planetary gear carrier (PT1) of the first planetary gear set (RS1) and can be indirectly connected to a planetary gear carrier (PT2) of the second planetary gear set (RS2), **in that** a second shaft (2) in the form of an output drive (Ab) is directly connected to an internal gear (H04) of the fourth planetary gear set (RS4) and is directly connected to a planetary gear carrier (PT3) of the third planetary gear set (RS3), **in that** the sun gear (SO1) and the planetary gear carrier (PT1) of the first planetary gear set (RS1) and also a sun gear (S04) of the fourth planetary gear set (RS4) can each be connected to the housing (9), **in that** an internal gear (HO1) of the first planetary gear set (RS1) is connected to a planetary gear carrier (PT4) of the fourth planetary gear set (RS4) and is connected to a sun gear (S02) of the second planetary gear set (RS2), and **in that** an internal gear (H02) of the second planetary gear set (RS2) and an internal gear (H03) of the third planetary gear set (RS3) can be connected to one another.

4. Multi-stage gear mechanism of planetary design for a vehicle, having a housing (9) in which four planetary gear sets (RS1, RS2, RS3, RS4) and a plurality of shafts (1, 2, 3, 4, 5, 6, 7, 8C) and also six shifting elements (A, B, C, D, E, F) are arranged, it being possible for several gear stages to be realized by virtue of the said shifting elements being operated, **characterized in that** a first shaft (1) in the form of a drive (An) is directly connected to a sun gear (SO3) of the third planetary gear set (RS3), can be indirectly connected to a sun gear (SO1) of the first planetary gear set (RS1), can be indirectly connected to a planetary gear carrier (PT1) of the first planetary gear set (RS1) and can be indirectly connected to a planetary gear carrier (PT2) of the second planetary gear set (RS2), **in that** a second shaft (2) in the form of an output drive (Ab) is directly connected to an internal gear (H04) of the fourth planetary gear set (RS4) and is directly connected to a planetary gear carrier (PT3) of the third planetary gear set (RS3), **in that** the sun gear (SO1) and the planetary gear carrier (PT1) of the first planetary gear set (RS1) and also a sun gear (S04) of the fourth planetary gear set (RS4) can each be connected to the housing (9), **in that** an internal gear (HO1) of the first planetary gear set (RS1) is connected to a planetary gear carrier (PT4) of the fourth planetary gear set (RS4) and is connected to a sun gear (S02) of the second planetary gear set (RS2), and **in that** an internal gear (H02) of the second planetary gear set (RS2) and an internal gear (H03) of the third planetary gear set (RS3) are connected to one another.

5. Multi-stage gear mechanism of planetary design for a vehicle, having a housing (9) in which four planetary gear sets (RS1, RS2, RS3, RS4) and a plurality of shafts (1, 2, 3, 4, 5, 6, 7, 8D) and also six shifting elements (A, B, C, D, E, F) are arranged, it being possible for several gear stages to be realized by virtue of the said shifting elements being operated, **characterized in that** a first shaft (1) in the form of a drive (An) is directly connected to a sun gear (S03) of the third planetary gear set (RS3), can be indirectly connected to a sun gear (SO1) of the first planetary gear set (RS1), can be indirectly connected to a planetary gear carrier (PT1) of the first planetary gear set (RS1) and can be indirectly connected to a planetary gear carrier (PT2) of the second planetary gear set (RS2), **in that** a second shaft (2) in the form of an output drive (Ab) is directly connected to an internal gear (H04) of the fourth planetary gear set (RS4) and is directly connected to a planetary gear carrier (PT3) of the third planetary gear set (RS3), **in that** the sun gear (SO1) and the planetary gear carrier (PT1) of the first planetary gear set (RS1) and also a sun gear (S04) of the fourth planetary gear set (RS4) can each be connected to the housing (9), **in that** an internal gear (HO1) of the first planetary gear set (RS1) is connected to a planetary gear carrier (PT4) of the fourth planetary gear set (RS4) and can be connected to a sun gear (S02) of the second planetary gear set (RS2), and **in that** an internal gear (H02) of the second planetary gear set (RS2) and an internal gear (H03) of the third planetary gear set (RS3) are connected to one another.

6. Multi-stage gear mechanism according to Claim 1, **characterized in that** the first shaft (1) can be connected to the sun gear (S03) of the third planetary gear set (RS3) via the first shifting element (A), which is designed as a clutch, and via an eighth shaft (8), **in that** the first shaft (1) can be connected to the planetary gear carrier (PT1) of the first planetary gear set (RS1) and to the planetary gear carrier (PT2) of the second planetary gear set (RS2) via the second shifting element (B), which is in the form of a clutch, and via a third shaft (3), wherein the planetary gear carrier (PT1) of the first planetary gear set (RS1) can be connected to the housing (9) via the third shaft (3) and via the fifth shifting element (E) which is designed as a brake, **in that** the first shaft (1) can be connected to the sun gear (SO1) of the first planetary gear set (RS1) via the third shifting element (C), which is in the form of a clutch, and via a fourth shaft (4), wherein the sun gear (SO1) of the first planetary gear set (RS1) can be connected to the housing (9) via the fourth shaft (4) and the fourth shifting element (D) which is designed as a brake, **in that** the second shaft (2) is connected to the internal gear (H04) of the fourth planetary gear set (RS4) and to the planetary gear carrier (PT3) of the third planetary gear set (RS3), **in that** the internal gear (HO1) of the first planetary gear set (RS1) is connected to the sun gear (S02) of the second planetary gear set (RS2) and to the planetary gear carrier (PT4) of the fourth planetary gear set (RS4) via a seventh shaft (7), **in that** the internal gear (H02) of the second planetary gear set (RS2) is connected to the internal gear (H03) of the third planetary gear set (RS3) via a sixth shaft (6), and **in that** the sun gear (S04) of the fourth planetary gear set (RS4) can be connected to the housing (9) via a fifth shaft (5) and via the sixth shifting element (F) which is in the form of a brake.

7. Multi-stage gear mechanism according to Claim 2, **characterized in that** the first shaft (1) is connected to the sun gear (S03) of the third planetary gear set (RS3), **in that** the first shaft (1) can be connected to the planetary gear carrier (PT1) of the first planetary gear set (RS1) and to the planetary gear carrier (PT2) of the second planetary gear set (RS2) via the second shifting element (B), which is in the form of a clutch, and via a third shaft (3), wherein the planetary gear carrier (PT1) of the first planetary gear set (RS1) can be connected to the housing (9) via the third shaft (3) and via the fifth shifting element (E) which is in the form of a brake, **in that** the first shaft (1) can be connected to the sun gear (SO1) of the first planetary gear set (RS1) via the third shifting element (C), which is in the form of a clutch, and via a fourth shaft (4), wherein the sun gear (SO1) of the first planetary gear set (RS1) can be connected to the housing (9) via the fourth shaft (4) and via the fourth shifting element (D) which is designed as a brake, **in that** the second shaft (2) is connected to the internal gear (H04) of the fourth planetary gear set (RS4), **in that** the second shaft (2) can be connected to the planetary gear carrier (PT3) of the third planetary gear set (RS3) via the first shifting element (A), which is in the form of a clutch, and via an eighth shaft (8A), **in that** the internal gear (HO1) of the first planetary gear set (RS1) is connected to the sun gear (S02) of the second planetary gear set (RS2) and to the planetary gear carrier (PT4) of the fourth planetary gear set (RS4) via a seventh shaft (7), **in that** the internal gear (H02) of the second planetary gear set (RS2) is connected to the internal gear (H03) of the third planetary gear set (RS3) via a sixth shaft (6), and **in that** the sun gear (S04) of the fourth planetary gear set (RS4) can be connected to the housing (9) via a fifth shaft (5) and via the sixth shifting element (F) which is in the form of a brake.

8. Multi-stage gear mechanism according to Claim 3, **characterized in that** the first shaft (1) is connected to the sun gear (S03) of the third planetary gear set (RS3), **in that** the first shaft (1) can be connected to the planetary gear carrier (PT1) of the first planetary gear set (RS1) and to the planetary gear carrier (PT2) of the second planetary gear set (RS2) via the second shifting element (B), which is in the form of a clutch, and via a third shaft (3), wherein the planetary gear carrier (PT1) of the first planetary gear set (RS1) can be connected to the housing (9) via the third shaft (3) and via the fifth shifting element (E) which is in the form of a brake, **in that** the first shaft (1) can be connected to the sun gear (SO1) of the first planetary gear set (RS1) via the third shifting element (C), which is in the form of a clutch, and via a fourth shaft (4), wherein the sun gear (SO1) of the first planetary gear set (RS1) can be connected to the housing (9) via the fourth shaft (4) and via the fourth shifting element (D) which is designed as a brake, **in that** the second shaft (2) is connected to the internal gear (H04) of the fourth planetary gear set (RS4) and to the planetary gear carrier (PT3) of the third planetary gear set (RS3), **in that** the internal gear (HO1) of the first planetary gear set (RS1) is connected to the sun gear (S02) of the second planetary gear set (RS2) and to the planetary gear carrier (PT4) of the fourth planetary gear set (RS4) via a seventh shaft (7), **in that** the internal gear (H02) of the second planetary gear set (RS2) can be connected to the internal gear (H03) of the third planetary gear set (RS3) via a sixth shaft (6) and via the first shifting element (A), which is in the form of a clutch, and also via an eighth shaft (8B), and **in that** the sun gear (S04) of the fourth planetary gear set (RS4) can be connected to the housing (9) via a fifth shaft (5) and via the sixth shifting element (F) which is in the form of a brake.

9. Multi-stage gear mechanism according to Claim 4, **characterized in that** the first shaft (1) is connected to the sun gear (S03) of the third planetary gear set (RS3), **in that** the first shaft (1) can be connected to the planetary gear carrier (PT1) of the first planetary gear set (RS1) via the second shifting element (B), which is in the form of a clutch, and via a third shaft (3), wherein the planetary gear carrier (PT1) of the first planetary gear set (RS1) can be connected to the housing (9) via the third shaft (3) and via the fifth shifting element (E) which is in the form of a brake, and wherein the planetary gear carrier (PT2) of the second planetary gear set (RS2) can be connected to the first shaft (1) and the planetary gear carrier (PT1) of the first planetary gear set (RS1) via the third shaft (3) and via the first shifting element (A), which is in the form of a clutch, and also via an eighth shaft (8C), **in that** the first shaft (1) can be connected to the sun gear (SO1) of the first planetary gear set (RS1) via the third shifting element (C), which is in the form of a clutch, and via a fourth shaft (4), wherein the sun gear (SO1) of the first planetary gear set (RS1) can be connected to the housing (9) via the fourth shaft (4) and via the fourth shifting element (D) which is designed as a brake, **in that** the second shaft (2) is connected to the internal gear (H04) of the fourth planetary gear set (RS4) and to the planetary gear carrier (PT3) of the third planetary gear set (RS3), **in that** the internal gear (HO1) of the first planetary gear set (RS1) is connected to the sun gear (S02) of the second planetary gear set (RS2) and to the planetary gear carrier (PT4) of the fourth planetary gear set (RS4) via a seventh shaft (7), **in that** the internal gear (H02) of the second planetary gear set (RS2) is connected to the internal gear (H03) of the third planetary gear set (RS3) via a sixth shaft (6), and **in that** the sun gear (S04) of the fourth planetary gear set (RS4) can be connected to the housing (9) via a fifth shaft (5) and via the sixth shifting element (F) which is in the form of a brake.

10. Multi-stage gear mechanism according to Claim 5, **characterized in that** the first shaft (1) is connected to the sun gear (S03) of the third planetary gear set (RS3), **in that** the first shaft (1) can be connected to the planetary gear carrier (PT1) of the first planetary gear set (RS1) and to the planetary gear carrier (PT2) of the second planetary gear set (RS2) via the second shifting element (B), which is in the form of a clutch, and via a third shaft (3), wherein the planetary gear carrier (PT1) of the first planetary gear set (RS1) can be connected to the housing (9) via the third shaft (3) and via the fifth shifting element (E) which is in the form of a brake, **in that** the first shaft (1) can be connected to the sun gear (SO1) of the first planetary gear set (RS1) via the third shifting element (C), which is in the form of a clutch, and via a fourth shaft (4), wherein the sun gear (SO1) of the first planetary gear set (RS1) can be connected to the housing (9) via the fourth shaft (4) and via the fourth shifting element (D) which is in the form of a brake, **in that** the second shaft (2) is connected to the internal gear (H04) of the fourth planetary gear set (RS4) and to the planetary gear carrier (PT3) of the third planetary gear set (RS3), **in that** the internal gear (HO1) of the first planetary gear set (RS1) is connected to the planetary gear carrier (PT4) of the fourth planetary gear set (RS4) via a seventh shaft (7) and can be connected to the sun gear (S02) of the second planetary gear set (RS2) via the first shifting element (A), which is in the form of a clutch, and via an eighth shaft (8D), **in that** the internal gear (H02) of the second planetary gear set (RS2) is connected to the internal gear (H03) of the third planetary gear set (RS3) via a sixth shaft (6), and **in that** the sun gear (S04) of the fourth planetary gear set (RS4) can be connected to the housing (9) via a fifth shaft (5) and via the sixth shifting element (F) which is in the form of a brake.

11. Multi-stage gear mechanism according to one of the preceding claims, **characterized in that** at least nine forward gear stages (G1, G2, G3, G4, G5, G6, G7, G8, G9, Z) and at least one reverse gear stage (R) can be selected, wherein at least three of the shifting elements (A, B, C, D, E, F) are closed in order to realize each gear stage.

12. Multi-stage gear mechanism according to one of the preceding claims, **characterized in that** the first shifting element (A), the second shifting element (B) and the third shifting element (C) are each designed as a clutch, wherein the fourth shifting element (D), the fifth shifting element (E) and the sixth shifting element (F) are each designed as a brake.

13. Multi-stage gear mechanism according to Claim 12, **characterized in that** the first shifting element (A) and/or the fifth shifting element (E) are designed as interlocking shifting elements.

14. Multi-stage gear mechanism according to one of the preceding claims, **characterized in that** the first planetary gear set (RS1), the third planetary gear set (RS3) and the fourth planetary gear set (RS4) are each designed as a negative planetary gear set and the second planetary gear set (RS2) is designed as a positive planetary gear set.

15. Multi-stage gear mechanism according to one of the preceding claims, **characterized in that** a first gear (G1) is realized by the closed fifth (E), third (C) and first (A) shifting element, a second gear (G2) can be realized by the closed fifth (E), fourth (D) and first (A) shifting element, a third gear (G3) can be realized by the closed fifth (E), sixth (F) and first (A) shifting element, a fourth gear (G4) can be realized by the closed fourth (D), sixth (F) and first (A) shifting element, a fifth gear (G5) can be realized by the closed sixth (F), third (C) and first (A) shifting element, a sixth gear (G6) can be realized by the closed sixth (F), second (B) and first (A) shifting element, a seventh gear (G7) can be realized by the closed second (B), third (C) and first (A) shifting element, an eighth gear (G8) can be realized by the closed sixth (F), second (B) and third (C) shifting element, a ninth gear (G9) can be realized by the closed sixth (F), fourth (D) and second (B) shifting element, a reverse gear (R) can be realized by the closed fifth (E), sixth (F) and third (C) shifting element, and an alternative forward gear (Z) can be realized by the closed fourth (D), second (B) and first (A) shifting element, wherein all of the other shifting elements are open in each case.

16. Multi-stage gear mechanism according to one of Claims 1 to 5, **characterized in that** the planetary gear carrier (PT1) of the first planetary gear set (RS1) and the planetary gear carrier (PT2) of the second planetary gear set are directly connected or can be directly connected.

## Revendications

1. Transmission à plusieurs rapports de construction planétaire pour un véhicule comprenant un boîtier (9) dans lequel sont disposés quatre trains planétaires (RS1, RS2, RS3, RS4) et plusieurs arbres (1, 2, 3, 4, 5, 6, 7, 8) ainsi que six éléments de changement de vitesses (A, B, C, D, E, F), dont l'actionnement permet de réaliser plusieurs rapports de vitesses, **caractérisée en ce qu'**un premier arbre (1) en tant qu'entraînement (An) peut être connecté de manière indirecte à une roue solaire (SO3) du troisième train planétaire (RS3), peut être connecté de manière indirecte à une roue solaire (SO1) du premier train planétaire (RS1), peut être connecté de manière indirecte à un porte-satellites (PT1) du premier train planétaire (RS1) et peut être connecté de manière indirecte à un porte-satellites (PT2) du deuxième train planétaire (RS2), **en ce qu'**un deuxième arbre (2) en tant que prise de force (Ab) est connecté directement à une couronne dentée (H04) du quatrième train planétaire (RS4) et est connecté directement à un porte-satellites (PT3) du troisième train planétaire (RS3), **en ce que** la roue solaire (SO1) et le porte-satellites (PT1) du premier train planétaire (RS1) ainsi qu'une roue solaire (S04) du quatrième train planétaire (RS4) peuvent à chaque fois être connectés au boîtier (9), **en ce qu'**une couronne dentée (H01) du premier train planétaire (RS1) est connectée à un porte-satellites (PT4) du quatrième train planétaire (RS4) et à une roue solaire (S02) du deuxième train planétaire (RS2), et **en ce qu'**une couronne dentée (H02) du deuxième train planétaire (RS2) et une couronne dentée (H03) du troisième train planétaire (RS3) sont connectées l'une à l'autre.

2. Transmission à plusieurs rapports de construction planétaire pour un véhicule comprenant un boîtier (9) dans lequel sont disposés quatre trains planétaires (RS1, RS2, RS3, RS4) et plusieurs arbres (1, 2, 3, 4, 5, 6, 7, 8A) ainsi que six éléments de changement de vitesses (A, B, C, D, E, F), dont l'actionnement permet de réaliser plusieurs rapports de vitesses, **caractérisée en ce qu'**un premier arbre (1) en tant qu'entraînement (An) est connecté directement à une roue solaire (S03) du troisième train planétaire (RS3), peut être connecté de manière indirecte à une roue solaire (SO1) du premier train planétaire (RS1), peut être connecté de manière indirecte à un porte-satellites (PT1) du premier train planétaire (RS1) et peut être connecté de manière indirecte à un porte-satellites (PT2) du deuxième train planétaire (RS2), **en ce qu'**un deuxième arbre (2) en tant que prise de force (Ab) est connecté directement à une couronne dentée (H04) du quatrième train planétaire (RS4) et peut être connecté de manière indirecte à un porte-satellites (PT3) du troisième train planétaire (RS3), **en ce que** la roue solaire (SO1) et le porte-satellites (PT1) du premier train planétaire (RS1) ainsi qu'une roue solaire (S04) du quatrième train planétaire (RS4) peuvent à chaque fois être connectés au boîtier (9), **en ce qu'**une couronne dentée (HO1) du premier train planétaire (RS1) est connectée à un porte-satellites (PT4) du quatrième train planétaire (RS4) et à une roue solaire (S02) du deuxième train planétaire (RS2), et **en ce qu'**une couronne dentée (H02) du deuxième train planétaire (RS2) et une couronne dentée (H03) du troisième train planétaire (RS3) sont connectées l'une à l'autre.

3. Transmission à plusieurs rapports de construction planétaire pour un véhicule comprenant un boîtier (9) dans lequel sont disposés quatre trains planétaires (RS1, RS2, RS3, RS4) et plusieurs arbres (1, 2, 3, 4, 5, 6, 7, 8B) ainsi que six éléments de changement de vitesses (A, B, C, D, E, F), dont l'actionnement permet de réaliser plusieurs rapports de vitesses, **caractérisée en ce qu'**un premier arbre (1) en tant qu'entraînement (An) est connecté directement à une roue solaire (S03) du troisième train planétaire (RS3), peut être connecté de manière indirecte à une roue solaire (SO1) du premier train planétaire (RS1), peut être connecté de manière indirecte à un porte-satellites (PT1) du premier train planétaire (RS1) et peut être connecté de manière indirecte à un porte-satellites (PT2) du deuxième train planétaire (RS2), **en ce qu'**un deuxième arbre (2) en tant que prise de force (Ab) est connecté directement à une couronne dentée (H04) du quatrième train planétaire (RS4) et est connecté directement à un porte-satellites (PT3) du troisième train planétaire (RS3), **en ce que** la roue solaire (SO1) et le porte-satellites (PT1) du premier train planétaire (RS1) ainsi qu'une roue solaire (S04) du quatrième train planétaire (RS4) peuvent à chaque fois être connectés au boîtier (9), **en ce qu'**une couronne dentée (HO1) du premier train planétaire (RS1) est connectée à un porte-satellites (PT4) du quatrième train planétaire (RS4) et à une roue solaire (S02) du deuxième train planétaire (RS2), et **en ce qu'**une couronne dentée (H02) du deuxième train planétaire (RS2) et une couronne dentée (H03) du troisième train planétaire (RS3) peuvent être connectées l'une à l'autre.

4. Transmission à plusieurs rapports de construction planétaire pour un véhicule comprenant un boîtier (9) dans lequel sont disposés quatre trains planétaires (RS1, RS2, RS3, RS4) et plusieurs arbres (1, 2, 3, 4, 5, 6, 7, 8C) ainsi que six éléments de changement de vitesses (A, B, C, D, E, F), dont l'actionnement permet de réaliser plusieurs rapports de vitesses, **caractérisée en ce qu'**un premier arbre (1) en tant qu'entraînement (An) est connecté directement à une roue solaire (S03) du troisième train planétaire (RS3), peut être connecté de manière indirecte à une roue solaire (SO1) du premier train planétaire (RS1), peut être connecté de manière indirecte à un porte-satellites (PT1) du premier train planétaire (RS1) et peut être connecté de manière indirecte à un porte-satellites (PT2) du deuxième train planétaire (RS2), **en ce qu'**un deuxième arbre (2) en tant que prise de force (Ab) est connecté directement à une couronne dentée (H04) du quatrième train planétaire (RS4) et est connecté directement à un porte-satellites (PT3) du troisième train planétaire (RS3), **en ce que** la roue solaire (SO1) et le porte-satellites (PT1) du premier train planétaire (RS1) ainsi qu'une roue solaire (S04) du quatrième train planétaire (RS4) peuvent à chaque fois être connectés au boîtier (9), **en ce qu'**une couronne dentée (HO1) du premier train planétaire (RS1) est connectée à un porte-satellites (PT4) du quatrième train planétaire (RS4) et à une roue solaire (S02) du deuxième train planétaire (RS2), et **en ce qu'**une couronne dentée (H02) du deuxième train planétaire (RS2) et une couronne dentée (H03) du troisième train planétaire (RS3) sont connectées l'une à l'autre.

5. Transmission à plusieurs rapports de construction planétaire pour un véhicule comprenant un boîtier (9) dans lequel sont disposés quatre trains planétaires (RS1, RS2, RS3, RS4) et plusieurs arbres (1, 2, 3, 4, 5, 6, 7, 8D) ainsi que six éléments de changement de vitesses (A, B, C, D, E, F), dont l'actionnement permet de réaliser plusieurs rapports de vitesses, **caractérisée en ce qu'**un premier arbre (1) en tant qu'entraînement (An) est connecté directement à une roue solaire (SO3) du troisième train planétaire (RS3), peut être connecté de manière indirecte à une roue solaire (SO1) du premier train planétaire (RS1), peut être connecté de manière indirecte à un porte-satellites (PT1) du premier train planétaire (RS1) et peut être connecté de manière indirecte à un porte-satellites (PT2) du deuxième train planétaire (RS2), **en ce qu'**un deuxième arbre (2) en tant que prise de force (Ab) est connecté directement à une couronne dentée (H04) du quatrième train planétaire (RS4) et est connecté directement à un porte-satellites (PT3) du troisième train planétaire (RS3), **en ce que** la roue solaire (SO1) et le porte-satellites (PT1) du premier train planétaire (RS1) ainsi qu'une roue solaire (S04) du quatrième train planétaire (RS4) peuvent à chaque fois être connectés au boîtier (9), **en ce qu'**une couronne dentée (HO1) du premier train planétaire (RS1) est connectée à un porte-satellites (PT4) du quatrième train planétaire (RS4) et peut être connectée à une roue solaire (S02) du deuxième train planétaire (RS2), et **en ce qu'**une couronne dentée (H02) du deuxième train planétaire (RS2) et une couronne dentée (H03) du troisième train planétaire (RS3) sont connectées l'une à l'autre.

6. Transmission à plusieurs rapports selon la revendication 1, **caractérisée en ce que** le premier arbre (1) peut être connecté par le biais du premier élément de changement de vitesses (A) réalisé en tant qu'embrayage et par le biais d'un huitième arbre (8) à la roue solaire (SO3) du troisième train planétaire (RS3), **en ce que** le premier arbre (1) peut être connecté par le biais du deuxième élément de changement de vitesses (B) réalisé en tant qu'embrayage et par le biais d'un troisième arbre (3) au porte-satellites (PT1) du premier train planétaire (RS1) et au porte-satellites (PT2) du deuxième train planétaire (RS2), le porte-satellites (PT1) du premier train planétaire (RS1) pouvant être connecté au boîtier (9) par le biais du troisième arbre (3) et par le biais du cinquième élément de changement de vitesses (E) réalisé en tant que frein, **en ce que** le premier arbre (1) peut être connecté par le biais du troisième élément de changement de vitesses (C) réalisé en tant qu'embrayage et par le biais d'un quatrième arbre (4) à la roue solaire (SO1) du premier train planétaire (RS1), la roue solaire (SO1) du premier train planétaire (RS1) pouvant être connectée au boîtier (9) par le biais du quatrième arbre (4) et du quatrième élément de changement de vitesses (D) réalisé en tant que frein, **en ce que** le deuxième arbre (2) est connecté à la couronne dentée (H04) du quatrième train planétaire (RS4) et au porte-satellites (PT3) du troisième train planétaire (RS3), **en ce que** la couronne dentée (H01) du premier train planétaire (RS1) est connectée par le biais d'un septième arbre (7) à la roue solaire (S02) du deuxième train planétaire (RS2) et au porte-satellites (PT4) du quatrième train planétaire (RS4), **en ce que** la couronne dentée (H02) du deuxième train planétaire (RS2) est connectée par le biais d'un sixième arbre (6) à la couronne dentée (H03) du troisième train planétaire (RS3), et **en ce que** la roue solaire (S04) du quatrième train planétaire (RS4) peut être connectée au boîtier (9) par le biais d'un cinquième arbre (5) et par le biais du sixième élément de changement de vitesses (F) réalisé en tant que frein.

7. Transmission à plusieurs rapports selon la revendication 2, **caractérisée en ce que** le premier arbre (1) est connecté à la roue solaire (SO3) du troisième train planétaire (RS3), **en ce que** le premier arbre (1) peut être connecté par le biais du deuxième élément de changement de vitesses (B) réalisé en tant qu'embrayage et par le biais d'un troisième arbre (3) au porte-satellites (PT1) du premier train planétaire (RS1) et au porte-satellites (PT2) du deuxième train planétaire (RS2), le porte-satellites (PT1) du premier train planétaire (RS1) pouvant être connecté au boîtier (9) par le biais du troisième arbre (3) et par le biais du cinquième élément de changement de vitesses (E) réalisé en tant que frein, **en ce que** le premier arbre (1) peut être connecté par le biais du troisième élément de changement de vitesses (C) réalisé en tant qu'embrayage et par le biais d'un quatrième arbre (4) à la roue solaire (SO1) du premier train planétaire (RS1), la roue solaire (SO1) du premier train planétaire (RS1) pouvant être connectée au boîtier (9) par le biais du quatrième arbre (4) et par le biais du quatrième élément de changement de vitesses (D) réalisé en tant que frein, **en ce que** le deuxième arbre (2) est connecté à la couronne dentée (H04) du quatrième train planétaire (RS4), **en ce que** le deuxième arbre (2) peut être connecté par le biais du premier élément de changement de vitesses (A) réalisé en tant qu'embrayage et par le biais d'un huitième arbre (8A) au porte-satellites (PT3) du troisième train planétaire (RS3), **en ce que** la couronne dentée (H01) du premier train planétaire (RS1) est connectée par le biais d'un septième arbre (7) à la roue solaire (S02) du deuxième train planétaire (RS2) et au porte-satellites (PT4) du quatrième train planétaire (RS4), **en ce que** la couronne dentée (H02) du deuxième train planétaire (RS2) est connectée par le biais d'un sixième arbre (6) à la couronne dentée (H03) du troisième train planétaire (RS3), et **en ce que** la roue solaire (S04) du quatrième train planétaire (RS4) peut être connectée au boîtier (9) par le biais d'un cinquième arbre (5) et par le biais du sixième élément de changement de vitesses (F) réalisé en tant que frein.

8. Transmission à plusieurs rapports selon la revendication 3, **caractérisée en ce que** le premier arbre (1) est connecté à la roue solaire (S03) du troisième train planétaire (RS3), **en ce que** le premier arbre (1) peut être connecté par le biais du deuxième élément de changement de vitesses (B) réalisé en tant qu'embrayage et par le biais d'un troisième arbre (3) au porte-satellites (PT1) du premier train planétaire (RS1) et au porte-satellites (PT2) du deuxième train planétaire (RS2), le porte-satellites (PT1) du premier train planétaire (RS1) pouvant être connecté au boîtier (9) par le biais du troisième arbre (3) et par le biais du cinquième élément de changement de vitesses (E) réalisé en tant que frein, **en ce que** le premier arbre (1) peut être connecté par le biais du troisième élément de changement de vitesses (C) réalisé en tant qu'embrayage et par le biais d'un quatrième arbre (4) à la roue solaire (SO1) du premier train planétaire (RS1), la roue solaire (SO1) du premier train planétaire (RS1) pouvant être connectée au boîtier (9) par le biais du quatrième arbre (4) et par le biais du quatrième élément de changement de vitesses (D) réalisé en tant que frein, **en ce que** le deuxième arbre (2) est connecté à la couronne dentée (H04) du quatrième train planétaire (RS4) et au porte-satellites (PT3) du troisième train planétaire (RS3), **en ce que** la couronne dentée (H01) du premier train planétaire (RS1) est connectée par le biais d'un septième arbre (7) à la roue solaire (S02) du deuxième train planétaire (RS2) et au porte-satellites (PT4) du quatrième train planétaire (RS4), **en ce que** la couronne dentée (H02) du deuxième train planétaire (RS2) peut être connectée par le biais d'un sixième arbre (6) et par le biais du premier élément de changement de vitesses (A) réalisé en tant qu'embrayage ainsi que par le biais d'un huitième arbre (8B) à la couronne dentée (H03) du troisième train planétaire (RS3), et **en ce que** la roue solaire (S04) du quatrième train planétaire (RS4) peut être connectée au boîtier (9) par le biais d'un cinquième arbre (5) et par le biais du sixième élément de changement de vitesses (F) réalisé en tant que frein.

9. Transmission à plusieurs rapports selon la revendication 4, **caractérisée en ce que** le premier arbre (1) est connecté à la roue solaire (S03) du troisième train planétaire (RS3), **en ce que** le premier arbre (1) peut être connecté par le biais du deuxième élément de changement de vitesses (B) réalisé en tant qu'embrayage et par le biais d'un troisième arbre (3) au porte-satellites (PT1) du premier train planétaire (RS1), le porte-satellites (PT1) du premier train planétaire (RS1) pouvant être connecté au boîtier (9) par le biais du troisième arbre (3) et par le biais du cinquième élément de changement de vitesses (E) réalisé en tant que frein, et le porte-satellites (PT2) du deuxième train planétaire (RS2) pouvant être connecté par le biais du troisième arbre (3) et par le biais du premier élément de changement de vitesses (A) réalisé en tant qu'embrayage ainsi que par le biais d'un huitième arbre (8C) au premier arbre (1) et au porte-satellites (PT1) du premier train planétaire (RS1), **en ce que** le premier arbre (1) peut être connecté par le biais du troisième élément de changement de vitesses (C) réalisé en tant qu'embrayage et par le biais d'un quatrième arbre (4) à la roue solaire (SO1) du premier train planétaire (RS1), la roue solaire (SO1) du premier train planétaire (RS1) pouvant être connectée au boîtier (9) par le biais du quatrième arbre (4) et par le biais du quatrième élément de changement de vitesses (D) réalisé en tant que frein, **en ce que** le deuxième arbre (2) est connecté à la couronne dentée (H04) du quatrième train planétaire (RS4) et au porte-satellites (PT3) du troisième train planétaire (RS3), **en ce que** la couronne dentée (H01) du premier train planétaire (RS1) est connectée par le biais d'un septième arbre (7) à la roue solaire (SO2) du deuxième train planétaire (RS2) et au porte-satellites (PT4) du quatrième train planétaire (RS4), **en ce que** la couronne dentée (H02) du deuxième train planétaire (RS2) est connectée par le biais d'un sixième arbre (6) à la couronne dentée (H03) du troisième train planétaire (RS3), et **en ce que** la roue solaire (S04) du quatrième train planétaire (RS4) peut être connectée au boîtier (9) par le biais d'un cinquième arbre (5) et par le biais du sixième élément de changement de vitesses (F) réalisé en tant que frein.

10. Transmission à plusieurs rapports selon la revendication 5, **caractérisée en ce que** le premier arbre (1) est connecté à la roue solaire (S03) du troisième train planétaire (RS3), **en ce que** le premier arbre (1) peut être connecté par le biais du deuxième élément de changement de vitesses (B) réalisé en tant qu'embrayage et par le biais d'un troisième arbre (3) au porte-satellites (PT1) du premier train planétaire (RS1) et au porte-satellites (PT2) du deuxième train planétaire (RS2), le porte-satellites (PT1) du premier train planétaire (RS1) pouvant être connecté au boîtier (9) par le biais du troisième arbre (3) et par le biais du cinquième élément de changement de vitesses (E) réalisé en tant que frein, **en ce que** le premier arbre (1) peut être connecté par le biais du troisième élément de changement de vitesses (C) réalisé en tant qu'embrayage et par le biais d'un quatrième arbre (4) à la roue solaire (SO1) du premier train planétaire (RS1), la roue solaire (SO1) du premier train planétaire (RS1) pouvant être connectée au boîtier (9) par le biais du quatrième arbre (4) et par le biais du quatrième élément de changement de vitesses (D) réalisé en tant que frein, **en ce que** le deuxième arbre (2) est connecté à la couronne dentée (H04) du quatrième train planétaire (RS4) et au porte-satellites (PT3) du troisième train planétaire (RS3), **en ce que** la couronne dentée (H01) du premier train planétaire (RS1) est connectée par le biais d'un septième arbre (7) au porte-satellites (PT4) du quatrième train planétaire (RS4) et par le biais du premier élément de changement de vitesses (A) réalisé en tant qu'embrayage et peut être connectée par le biais d'un huitième arbre (8D) à la roue solaire (S02) du deuxième train planétaire (RS2), **en ce que** la couronne dentée (H02) du deuxième train planétaire (RS2) est connectée par le biais d'un sixième arbre (6) à la couronne dentée (H03) du troisième train planétaire (RS3), et **en ce que** la roue solaire (S04) du quatrième train planétaire (RS4) peut être connectée au boîtier (9) par le biais d'un cinquième arbre (5) et par le biais du sixième élément de changement de vitesses (F) réalisé en tant que frein.

11. Transmission à plusieurs rapports selon l'une quelconque des revendications précédentes, **caractérisée en ce qu'**au moins neuf rapports de vitesses de marche avant (G1, G2, G3, G4, G5, G6, G7, G8, G9, Z) et au moins un rapport de vitesses de marche arrière (R) peuvent être commutés, au moins trois des éléments de changement de vitesses (A, B, C, D, E, F) étant fermés pour réaliser chaque rapport de vitesse.

12. Transmission à plusieurs rapports selon l'une quelconque des revendications précédentes, **caractérisée en ce que** le premier élément de changement de vitesses (A), le deuxième élément de changement de vitesses (B) et le troisième élément de changement de vitesses (C) sont chacun réalisés en tant qu'embrayage, le quatrième élément de changement de vitesses (D), le cinquième élément de changement de vitesses (E) et le sixième élément de changement de vitesses (F) étant chacun réalisés en tant que frein.

13. Transmission à plusieurs rapports selon la revendication 12, **caractérisée en ce que** le premier élément de changement de vitesses (A) et/ou le cinquième élément de changement de vitesses (E) sont réalisés en tant qu'éléments de changement de vitesses à engagement par correspondance de formes.

14. Transmission à plusieurs rapports selon l'une quelconque des revendications précédentes, **caractérisée en ce que** le premier train planétaire (RS1), le troisième train planétaire (RS3) et le quatrième train planétaire (RS4) sont à chaque fois réalisés en tant que trains planétaires négatifs et le deuxième train planétaire (RS2) est réalisé en tant que train planétaire positif.

15. Transmission à plusieurs rapports selon l'une quelconque des revendications précédentes, **caractérisée en ce qu'**une première vitesse (G1) est réalisée par la fermeture du cinquième (E), troisième (C) et premier (A) élément de changement de vitesses, une deuxième vitesse (G2) est réalisée par la fermeture du cinquième (E), quatrième (D) et premier (A) élément de changement de vitesses, une troisième vitesse (G3) est réalisée par la fermeture du cinquième (E), sixième (F) et premier (A) élément de changement de vitesses, une quatrième vitesse (G4) est réalisée par la fermeture du quatrième (D), sixième (F) et premier (A) élément de changement de vitesses, une cinquième vitesse (G5) est réalisée par la fermeture du sixième (F), troisième (C) et premier (A) élément de changement de vitesses, une sixième vitesse (G6) est réalisée par la fermeture du sixième (F), deuxième (B) et premier (A) élément de changement de vitesses, une septième vitesse (G7) est réalisée par la fermeture du deuxième (B), troisième (C) et premier (A) élément de changement de vitesses, une huitième vitesse (G8) est réalisée par la fermeture du sixième (F), deuxième (B) et troisième (C) élément de changement de vitesses, une neuvième vitesse (G9) est réalisée par la fermeture du sixième (F), quatrième (D) et deuxième (B) élément de changement de vitesses, une vitesse de marche arrière (R) est réalisée par la fermeture du cinquième (E), sixième (F) et troisième (C) élément de changement de vitesses et une vitesse de marche avant alternative (Z) peut être réalisée par la fermeture du quatrième (D), deuxième (B) et premier (A) élément de changement de vitesses, tous les autres éléments de changement de vitesses étant à chaque fois ouverts.

16. Transmission à plusieurs rapports selon l'une quelconque des revendications 1 à 5, **caractérisée en ce que** le porte-satellites (PT1) du premier train planétaire (RS1) et le porte-satellites (PT2) du deuxième train planétaire sont ou peuvent être connectés directement.
